# EUROPEAN PATENT APPLICATION

(11) **EP 2 533 536 A2**
(43) Date of publication of application: **12.12.2012**
(21) Application number: 12004742.8
(22) Date of filing: 21.07.2006
(51) Int. Cl.: H04N 7/24, G06F 17/30

(54) **Method and apparatus for encoding multimedia contents and method and system for applying encoded multimedia contents**

(30) Priority: 11.10.2005 US 724789 P; 17.03.2006 US 783067 P
(62) Divisional of application: 06823605.8
(71) Applicant: Samsung Electronics Co., Ltd., Suwon-si, Gyeonggi-do, 443-742 (KR); Korea Advanced Institute of Science and Technology (KAIST), Daejeon, 305-701 (KR)
(72) Inventor: Kim, Sang-Kyun, Gyeonggi-do 449-567 (KR); Kim, Ji-Yeun, Seoul 134-070 (KR); Moon, Young-Su, Seoul 158-751 (KR); Ro, Yong-Man, Daejeon-si 305-768 (KR); Yang, Seung-Ji, Gangwon-do 220-030 (KR)
(74) Representative: Grünecker, Kinkeldey, Stockmair & Schwanhäusser

(57) **Abstract**

A method and an apparatus for encoding multimedia contents, and a method and a system for applying multimedia contents are provided. The method for applying multimedia contents includes: storing an MAF file in a database, the MAF file including a header with location information that provides the location of media data, at least one single track with media data and metadata compatible with a predetermined standard, utilization data representing information for media application method; and browsing or sharing the MAF file stored in the database. The media metadata compatible with the predetermined standard is at least one of media player metadata and a media album metadata. Accordingly, even when the user does not have a specific application or a function for applying metadata, general-purpose multimedia content files can be effectively used by effectively browsing or sharing the multimedia content files.

## Description

### TECHNICAL FIELD

The present invention relates to processing of multimedia contents, and more particularly, to a method of and apparatus for encoding multimedia contents and a method of and system for applying encoded multimedia contents.

### BACKGROUND ART

Moving Picture Experts Group (MPEG), which is an international standardization organization related to multimedia, has been conducting standardization of MPEG-2, MPEG-4, MPEG-7 and MPEG-21, since its first standardization of MPEG-1 in 1988. As a variety of standards have been developed in this way, a need to generate one profile by combining different standard technologies has arisen. As a step responding to this need, MPEG-A (MPEG Application: ISO/ICE230000) multimedia application standardization activities have been carried out. Application format standardization for music contents has been performed under a name of MPEG Music Player Application Format (ISO/ICE 23000-2) and at present the standardization is in its final stage. Meanwhile, application format standardization for image contents, and photo contents in particular, has entered a fledgling stage under a name of MPEG Photo Player Application Format (ISO/IEC 23000-3).

Previously, element standards required in one single standard system are grouped as a set of function tools, and made to be one profile to support a predetermined application service. However, this method has a problem in that it is difficult to satisfy a variety of technological requirements of industrial fields with a single standard. In a multimedia application format (MAF) for which standardization has been newly conducted, non-MPEG standards as well as the conventional MPEG standards are also combined so that the utilization value of the standard can be enhanced by actively responding to the demand of the industrial fields. The major purpose of the MAF standardization is to provide opportunities that MPEG technologies can be easily used in industrial fields. In this way, already verified standard technologies can be easily combined without any further efforts to set up a separate standard for application services required in the industrial fields.

At present, a music MAF is in a final draft international standard (FDIS) state and the standardization is in an almost final stage. Accordingly, the function of an MP3 player which previously performed only a playback function can be expanded and thus the MP3 player can automatically classify music files by genre and reproduce music files, or show the lyrics or browse album jacket photos related to music while the music is reproduced. This means that a file format in which users can receive more improved music services has been prepared. In particular, recently, the MP3 player has been mounted on a mobile phone, a game console (e.g., Sony's PSP), or a portable multimedia player (PMP) and has gained popularities among consumers. Therefore, a music player with enhanced functions using the MAF is expected to be commercialized soon.

Meanwhile, standardization of a photo MAF is in its fledgling stage. Like the MP3 music, photo data (in general, Joint Photographic Experts Group (JPEG) data) obtained through a digital camera has been rapidly increasing with the steady growth of the digital camera market. As media (memory cards) for storing photo data have been evolving toward a smaller size and higher integration, hundreds of photos can be stored in one memory card now. However, in proportion to the increasing amount of the photos, the difficulties that users are experiencing have also been increasing.

In the recent several years, the MPEG has standardized element technologies required for content-based retrieval and/or indexing as descriptors and description schemes under the name of MPEG-7. A descriptor defines a method of extracting and expressing content-based feature values, such as texture, shape, and motions of an image, and a description scheme defines the relations between two or more descriptors and a description scheme in order to model digital contents, and defines how to express data. Though the usefulness of MPEG-7 has been proved through a great number of researches, lack of an appropriate application format has prevented utilization of the MPEG-7 in the industrial fields. In order to solve this problem, the photo MAF is aimed to standardize a new application format which combines photo digital contents and related metadata in one file.

Also, the MPEG is standardizing a multimedia integration framework under the name of MPEG-21. That is, in order to solve potential problems, including compatibility among content expression methods, methods of network transmission, and compatibility among terminals, caused by individual fundamental structures for transmission and use of multimedia contents and individual management systems, the MPEG is suggesting a new standard enabling transparent access, use, process, and reuse of multimedia contents through a variety of networks and devices. The MPEG-21 includes declaration, adaptation, and processing of digital items (multimedia contents + metadata). However, the problem of how to interoperate the technologies of the MPEG-7 and MPEG-21 with the MAF has yet to be solved.

### DISCLOSURE OF INVENTION

### TECHNICAL PROBLEM

The present invention provides a method and apparatus for encoding multimedia contents in which in order to allow a user to effectively browse or share photos, photo data, visual feature information obtained from the contents of photo images, and a variety of hint feature information for effective indexing of photos are used as metadata and encoded into a multimedia application format (MAF) file.

The present invention also provides a method and system for applying encoded multimedia contents, in which an MAF file is processed in order to allow a user to browse or share the MAF file.

### TECHNICAL SOLUTION

According to an aspect of the present invention, there is provided a method of encoding multimedia contents, comprising: separating media data and metadata from multimedia contents; creating metadata complying with a predetermined standard format by using the separated metadata; and encoding the media data and the metadata complying with the standard format, and thus creating a multimedia application format (MAF) file including a header containing information indicating a location of the media data, the metadata and the media data, wherein the metadata complying with the standard format includes media player metadata.

According to another aspect of the present invention, there is provided an apparatus for encoding multimedia contents, comprising: a pre-processing unit separating media data and metadata from multimedia contents; a metadata creation unit creating metadata complying with a predetermined standard format by using the separated metadata; and an encoding unit encoding the media data and the metadata complying with the standard format, and thus creating an MAF file including a header containing information indicating a location of the media data, the metadata and the media data, wherein the metadata complying with the standard format includes media player metadata.

According to another aspect of the present invention, there is provided a method of applying multimedia contents comprising: storing in a database, an MAF file, including at least one single track which includes a header containing information indicating a location of media data, media data complying with a predetermined standard format, and media metadata, and application data indicating information on an application method of the media; and browsing or sharing the MAF file stored in the database, wherein the media data complying with a predetermined standard format is at least one of media player metadata or media album metadata.

According to another aspect of the present invention, there is provided a system for applying multimedia contents, comprising: a database storing an MAF file, including at least one single track which includes a header containing information indicating a location of media data, media data, and media metadata, and application data indicating information on an application method of the media; and an application unit browsing or sharing the MAF file stored in the database, wherein media data complying with the standard format is at lease one of media player metadata and media album metadata.

According to still another aspect of the present invention, there is provided a computer readable recording medium having embodied thereon a computer program for executing the methods.

### ADVANTAGEOUS EFFECTS

In a process of integrating digital photos and other multimedia content files into one file in the application file format MAF, visual feature information obtained from photo data and the contents of the photo images, and a variety of hint feature information for effective indexing of photos are included as metadata and content application method tools based on the metadata are included. Accordingly, even when the user does not have a specific application or a function for applying metadata, general-purpose multimedia content files can be effectively used by effectively browsing or sharing the multimedia content files.

### DESCRIPTION OF DRAWINGS

The above and other features and advantages of the present invention will become more apparent by describing in detail exemplary embodiments thereof with reference to the attached drawings in which:
FIG. 1 is a block diagram illustrating a structure of an apparatus for encoding multimedia contents according to an embodiment of the present invention;
FIG. 2 illustrates elements of media metadata created in a metadata creation unit of in FIG. 1 according to an embodiment of the present invention;
FIG. 3 illustrates a detailed structure of the media album metadata of FIG. 2 according to an embodiment of the present invention;
FIG. 4 illustrates a description structure of photo perception hint information of media album metadata illustrated in FIG. 3 according to an embodiment of the present invention;
FIG. 5 illustrates a description structure of photo acquisition hint information of the media album metadata illustrated in FIG. 3 according to an embodiment of the present invention;
FIG. 6 illustrates a description structure of photo view hint information of the media album metadata illustrated in FIG. 3 according to an embodiment of the present invention;
FIG. 7 illustrates a description structure of subject hint information of the media album metadata illustrated in FIG. 3 according to an embodiment of the present invention;
FIG. 8 illustrates a detailed structure of the media player metadata of FIG. 2 according to an embodiment of the present invention;
FIG. 9 illustrates elements of photo collection metadata of FIG. 8 according to an embodiment of the present invention;
FIG. 10 illustrates a structure of a photo collection identifier of FIG. 8 on the basis of MPEG-7 according to an embodiment of the present invention;
FIG. 11 illustrates a structure of essential elements of a photo collection metadata of FIG. 8 according to an embodiment of the present invention;
FIG. 12 illustrates a structure of the event collection metadata of FIG. 8 in an MPEG-7 schema form according to an embodiment of the present invention;
FIG. 13 illustrates a structure of the category collection metadata of FIG. 8 in an MPEG-7 schema form according to an embodiment of the present invention;
FIG. 14 illustrates a structure of the person collection metadata of FIG. 8 in an MPEG-7 schema form according to an embodiment of the present invention;
FIG. 15 illustrates elements of the event collection metadata of FIG. 8 according to an embodiment of the present invention;
FIG. 16 illustrates elements of the category collection metadata of FIG. 8 according to an embodiment of the present invention;
FIG. 17 illustrates elements of the person collection metadata of FIG. 8 according to an embodiment of the present invention;
FIGS. 18A and 18B illustrate a detailed structure of an MAF file created in an encoding unit illustrated in FIG. 1 according to an embodiment of the present invention;
FIG. 19 illustrates a detailed structure of media application method data created in an application method data creation unit illustrated in FIG. 1 according to an embodiment of the present invention;
FIGS. 20A and 20B illustrate examples of MAF files according to an embodiment of the present invention;
FIG. 21 illustrates an example of an MAF file including thumbnail images according to an embodiment of the present invention;
FIG. 22 is a block diagram of a structure of a system for applying multimedia contents according to an embodiment of the present invention;
FIG. 23 illustrates a process of interoperating browsing and sharing functions of a photo album MAF file with a database according to an embodiment of the present invention;
FIG. 24 illustrates a process of browsing a photo album MAF file through different album apparatuses according to an embodiment of the present invention;
FIG. 25 illustrates browsing a photo on a mobile album apparatus using a photo album MAF file according to an embodiment of the present invention;
FIG. 26 illustrates browsing a photo on a web album apparatus using a photo album MAF file according to an embodiment of the present invention;
FIG. 27 illustrates a procedure of applying a photo album MAF file on a web album apparatus according to an embodiment of the present invention;
FIGS. 28A and 28B illustrate elements of collection level description metadata and item level description metadata according to an embodiment of the present invention;
FIG. 29 illustrates elements of the event collection metadata of FIG. 8 according to an embodiment of the present invention;
FIG. 30 illustrates elements of the category collection metadata of FIG. 8 according to an embodiment of the present invention; and
FIG. 31 illustrates elements of the person collection metadata of FIG. 8 according to an embodiment of the present invention.

### MODE FOR INVENTION

The present invention will now be described more fully with reference to the accompanying drawings, in which exemplary embodiments of the invention are shown.

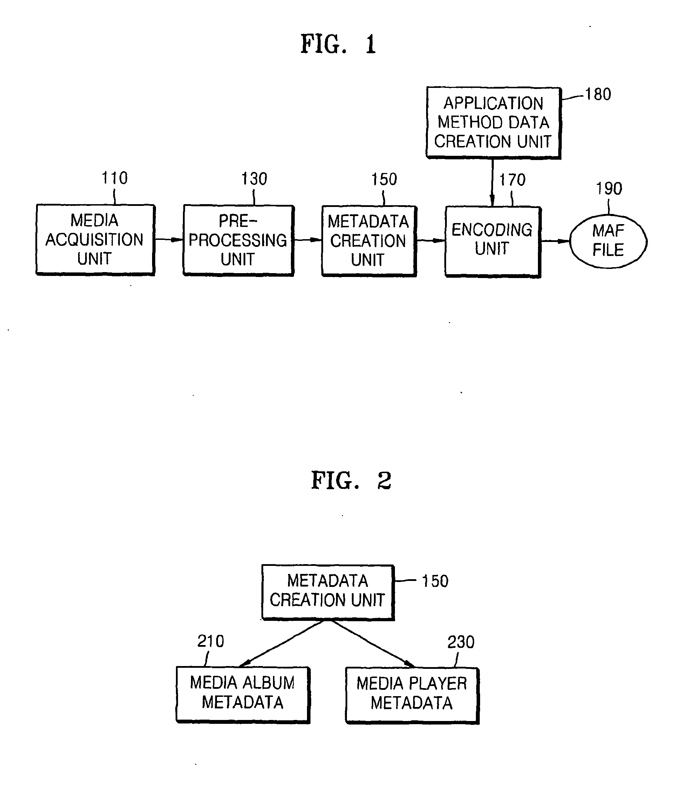

FIG. 1 is a block diagram illustrating a structure of an apparatus for encoding multimedia contents according to an embodiment of the present invention.
The apparatus for encoding multimedia contents according to the embodiment is composed of a pre-processing unit 130, a metadata creation unit 150 and an encoding unit 170. According to another embodiment of the present invention, an apparatus for encoding multimedia contents may further include a media acquisition unit 110. Also, according to still another embodiment of the present invention, an apparatus for encoding multimedia contents may further include an application method data creation unit 180.

Referring to FIG. 1, the media acquisition unit 110 obtains one or more media contents, such as photos, music, and video, by using a digital photographing apparatus or recording apparatus. The obtained media content is provided to the pre-processing unit 130.

The pre-processing unit 130 creates media data and basic metadata of the media content from the input media content. At this time, media content may be provided from the media acquisition unit 110 or may be input from the outside other than the media acquisition unit 110. By parsing exchangeable image file format (Exif) metadata included in the media content or decoding JPEG images, the pre-processing unit 130 extracts information required to generate basic metadata of the media content, and by using the extracted information, the pre-processing unit 130 creates the basic metadata of the media content. The basic metadata includes metadata which is described when each media content is obtained or created. Examples of the basic metadata may include Exif metadata for a JPEG photo file, ID3 metadata of an MP3 music file, and compression related metadata of an MPEG video file, but the basic metadata is not limited to these examples. The media data and basic metadata created in the pre-processing unit 130 are provided to the media metadata creation unit 150.

The metadata creation unit 150 creates media metadata required for forming a single integrated MAF file from a large amount of media data. According to an embodiment, the media metadata creation unit 150 creates media metadata complying with a predetermined standard, by using basic metadata provided from the pre-processing unit 130. According to another embodiment, the media metadata creation unit 150 extracts and creates basic metadata directly from the input media content, by using an MPEG-based standardized description tool, and by using the created basic metadata, creates media metadata complying with a standard. When media metadata is created complying with a standardized format and structure, MPEG-7 and MPEG-21 may be used, but the embodiment is not limited to these.

The encoding unit 170 encodes media metadata provided from the metadata creation unit 150 together with media data, and creates a single integrated MAF file 190 as the result of the encoding.

The application method data creation unit 180 creates data on an application method of an MAF file, and provides the created application method data to the encoding unit 170.

FIG. 2 illustrates elements of media metadata created in a metadata creation unit 150 of in FIG. 1 according to an embodiment of the present invention. The media metadata includes at least one of media album metadata 210 with detailed metadata information and media player metadata 230 with simple metadata information.

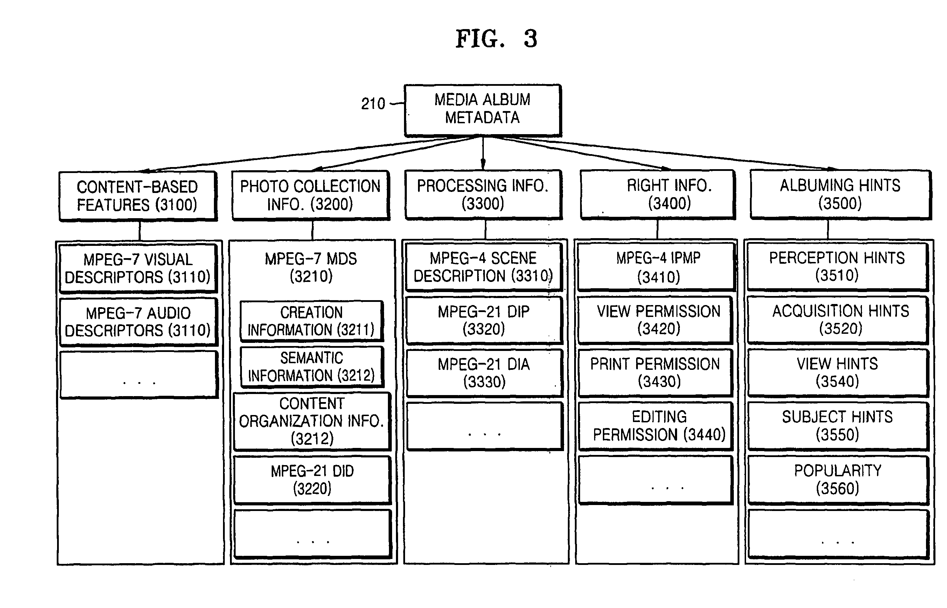

FIG. 3 illustrates a detailed structure of the media album metadata 210 of FIG. 2 according to an embodiment of the present invention.

Referring to FIG. 3, the media metadata includes an item (content-based features) 3100 indicating content-based feature values of media content, an item (photo collection information) 3200 indicating group information of photos collected together after dividing a large amount of photos into meaningful groups, an item (processing information) 3300 indicating information required for browsing or sharing photos based on media metadata, an item (right information) 3400 indicating use (consumption) right for a created photo album, and an item (albuming hint) 3500 indicating information used as a hint for effectively forming a photo album.

The content-based features item 3100 includes an MPEG-7 visual descriptor 3110 that is metadata for visual feature information, such as the color, texture, and shape of photo content, and an MPEG-7 audio descriptor 3120 that is metadata for audio feature information, such as voice or music related to a photo.

The photo collection information item 3200 is an item describing information on photos belonging to an identical event, an identical person, or an identical category. In an embodiment, photo collection information may be expressed using MPEG-7 multimedia description scheme (MDS) 3210 or MPEG-21 digital item declaration (DID) 3220. However, the method of expressing the photo collection information of a photo album is not limited to the MPEG-7 MDS 3210 and the MPEG-21 DID 3220. Basically, the MPEG-7 MDS 3210 includes metadata of creation information 3211, metadata of semantic information 3212, and metadata of content organization information 3213 of media content. However, the MPEG-7 MDS 3210 applied to the present invention is not limited to those metadata, and can include other metadata included in the suggested MPEG-7 MDS.

The photo processing information item 3300 is an item describing information required in the process of browsing or sharing photos based on media metadata. For this, a procedure to display a plurality of photos on a screen based on metadata is described using an MPEG-4 scene description 3310, a procedure to display a plurality of photos on a screen based on media metadata is described using an MPEG-21 digital item processing (DIP) 3320, or information to adaptively transform a multimedia application format file for a photo album with respect to the performance of a terminal or a network, is described by using an MPEG-21 digital item adaptation (DIA) 3330.

The item 3400 indicating a user right over a photo album is an item by which an owner of an MAF file for a photo album encrypts the MAF file for the photo album and controls access by others to the photo album. The item 3400 includes MPEG-21 intellectual property management and protection (IPMP) 3410, an item (view permission) 3420 to control browsing of the MAF file for the photo album by using other right expression methods, an item (print permission) 3430 to control printing of the MAF file for the photo album, and an item (editing permission) 3440 to control editing of the MAF file for the photo album. However, the item 3400 indicating a user right is not limited to these items.

The albuming hint item 3500 includes a hint item (perception hints) 3510 to express perceptional characteristics of a human being in relation to the contents of a photo, a hint item (acquisition hints) 3520 to express camera information and photographing information when a photo is taken, a hint item (view hints) 3540 to express view information of a photo, a hint item (subject hints) 3550 to express information on persons included in a photo, and a hint item (popularity) 3560 to express popularity information of a photo.

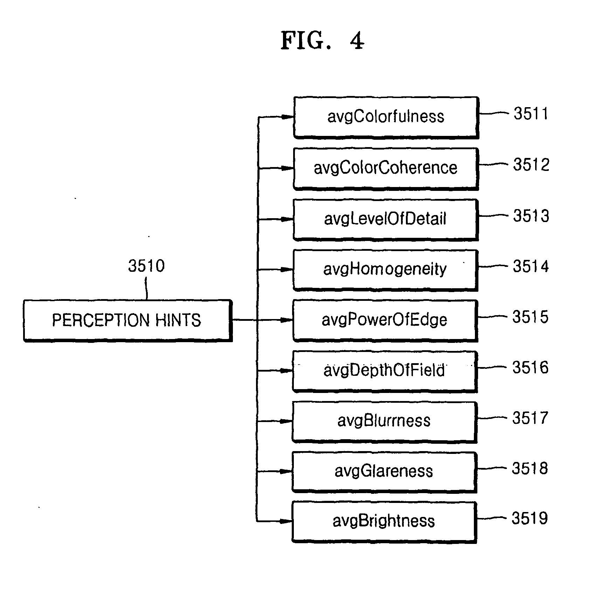

FIG. 4 illustrates a description structure of the perception hint item 3510 illustrated in FIG. 3 in detail according to an embodiment of the present invention. Since a feeling most strongly felt by a person exists when the person watches a photo, the description structure of the perception hint item 3510 includes information on the characteristic that a person intuitively perceives the contents of a photo.

Referring to FIG. 4, the description structure of the perception hint item 3510 includes an item (avgColorfulness) 3511 indicating the colorfulness of the color tone expression of a photo, an item (avgColorCoherence) 3512 indicating the color coherence of the entire color tone appearing in a photo, an item (avgLevelOfDetail) 3513 indicating the detailedness of the contents of a photo, an item (avgHomogenity) 3514 indicating the homogeneity of texture information of the contents of a photo, an item (avgPowerOfEdge) 3515 indicating the robustness of edge information of the contents of a photo, an item (avgDepthOfField) 3516 indicating the depth of the focus of a camera in relation to the contents of a photo, an item (avgBlurness) 3517 indicating the blurness of a photo caused by shaking of a camera generally due to a slow shutter speed, an item (avgGlareness) 3518 indicating the degree that the contents of a photo are affected by a very bright flash light or a very bright external light source when the photo is taken, and an item (avgBrightness) 3519 indicating information on the brightness of an entire photo.

The item (avgColorfulness) 3511 indicating the colorfulness of the color tone expression of a photo can be measured after normalizing the histogram heights of each RGB color value and the distribution value the entire color values from a color histogram, or by using the distribution value of a color measured using a CIE L*u*v color space. However, the method of measuring the item 3511 indicating the colorfulness is not limited to these methods.

The item (avgColorCoherence) 3512 indicating the color coherence of the entire color tone appearing in a photo can be measured by using a dominant color descriptor among the MPEG-7 visual descriptors, and can be measured by normalizing the histogram heights of each color value and the distribution value the entire color values from a color histogram. However, the method of measuring the item 3512 indicating the color coherence of the entire color tone appearing in a photo is not limited to these methods.

The item (avgLevelOfDetail) 3513 indicating the detailedness of the contents of a photo can be measured by using an entropy measured from the pixel information of the photo, or by using an isopreference curve that is an element for determining the actual complexity of a photo, or by using a relative measurement method in which compression ratios are compared when compressions are performed under identical conditions, including the same image sizes, and quantization steps. However, the method of measuring the item 3513 indicating the detailedness of contents of a photo is not limited to these methods.

The item (avgHomogenity) 3514 indicating the homogeneity of texture information of the contents of a photo can be measured by using the regularity, direction and scale of texture from feature values of a texture browsing descriptor among the MPEG-7 visual descriptors. However, the method of measuring the item 3514 indicating the homogeneity of texture information of the contents of a photo is not limited to this method.

The item (avgPowerOfEdge) 3515 indicating the robustness of edge information of the contents of a photo can be measured by extracting edge information from a photo and normalizing the extracted edge power. However, the method of measuring the item 3515 indicating the robustness of edge information of the contents of a photo is not limited to this method.

The item (avgDepthOfField) 3516 indicating the depth of the focus of a camera in relation to the contents of a photo can be measured generally by using the focal length and diameter of a camera lens, and an iris number. However, the method of measuring the item 3516 indicating the depth of the focus of a camera in relation to the contents of a photo is not limited to this method.

The item (avgBlurrness) 3517 indicating the blurriness of a photo caused by shaking of a camera generally due to a slow shutter speed can be measured by using the edge power of the contents of the photo. However, the method of measuring the item 3517 indicating the blurriness of a photo caused by shaking of a camera due to a slow shutter speed is not limited to this method.

The item (avgGlareness) 3518 indicating the degree that the contents of a photo are affected by a very bright external light source is a value indicating a case where a light source having a greater amount of light than a threshold value is photographed in a part of a photo or in the entire photo, that is, a case of excessive exposure, and can be measured by using the brightness of the pixel value of the photo. However, the method of measuring the item 3518 indicating the degree that the contents of a photo are affected by a very bright external light source is not limited to this method.

The item (avgBrightness) 3519 indicating information on the brightness of an entire photo can be measured by using the brightness of the pixel value of the photo. However, the method of measuring the item 3519 indicating information on the brightness of an entire photo is not limited to this method.

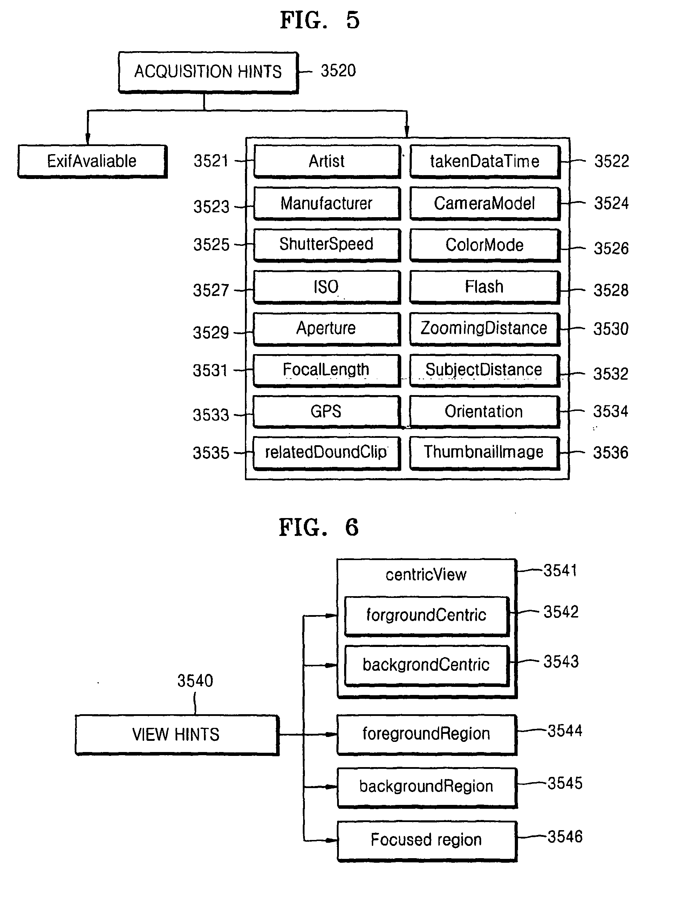

FIG. 5 illustrates a description structure of the photo acquisition hint item 3520 illustrated in FIG. 3 in detail according to an embodiment of the present invention. The photo acquisition hints 3520 includes basic photographing information and camera information, which can be used in photo albuming.

Referring to FIG. 5, the description structure of the photo acquisition hint item 3520 includes information (EXIFAvailable) 3521 indicating whether or not photo data includes Exif information as metadata, information (artist) 3522 on the name and ID of a photographer who takes a photo, time information (takenDateTime) 3523 on the time when a photo is taken, information (manufacturer) 3524 on the manufacturer of the camera with which a photo is taken, camera model information (CameraModel) 3525 of a camera with which a photo is taken, shutter speed information (ShutterSpeed) 3526 of a shutter speed used when a photo is taken, color mode information (ColorMode) 3527 of a color mode used when a photo is taken, information (ISO) 3528 indicating the sensitivity of a film (in case of a digital camera, a CCD or CMOS image pickup device) when a photo is taken, information (Flash) 3529 indicating whether or not a flash is used when a photo is taken, information (Aperture) 3530 indicating the aperture number of a lens iris used when a photo is taken, information (ZoomingDistance) 3531 indicating the optical or digital zoom distance used when a photo is taken, information (FocalLength) 3532 indicating the focal length used when a photo is taken, information (SubjectDistance) 3533 indicating the distance between the focused subject and the camera when a photo is taken, GPS information (GPS) 3534 on a place where a photo is taken, information (Orientation) 3535 indicating the orientation of a first pixel of a photo image as the orientation of a camera when the photo is taken, information (relatedSoundClip) 3536 indicating voice or sound recorded together when a photo is taken, and information (Thumbnaillmage) 3537 indicating a thumbnail image stored for high-speed browsing in a camera after a photo is taken.

The above information exists in Exif metadata, and can be used effectively for albuming of photos. If photo data includes Exif metadata, more information can be used. However, since photo data may not include Exif metadata, the important metadata is described as photo albuming hints. The description structure of the photo acquisition hint item 3520 includes the information items described above, but is not limited to these items.

FIG. 6 illustrates a description structure of the photo view hint item 3540 illustrated in FIG. 3 in detail according to an embodiment of the present invention.

Referring to FIG. 6, the photo view hint item 3540 includes an item (centricView) 3541 indicating whether the major part expressed in a photo is a background or a foreground, an item (foregroundRegion) 3544 indicating the position of a part corresponding to the foreground of a photo in the contents expressed in the photo, an item (backgroundRegion) 3545 indicating the position of a part corresponding to the background of a photo, and an item 3546 (focused region) 3546 indicating a focused region in a photo. Here, the item 3541 indicating whether the major part expressed in a photo is a background or a foreground, includes an item (foregroundCentric) 3542 expressing a case where the foreground is the major part and an item (backgroundCentric) 3543 expressing a case where the background is the major part.

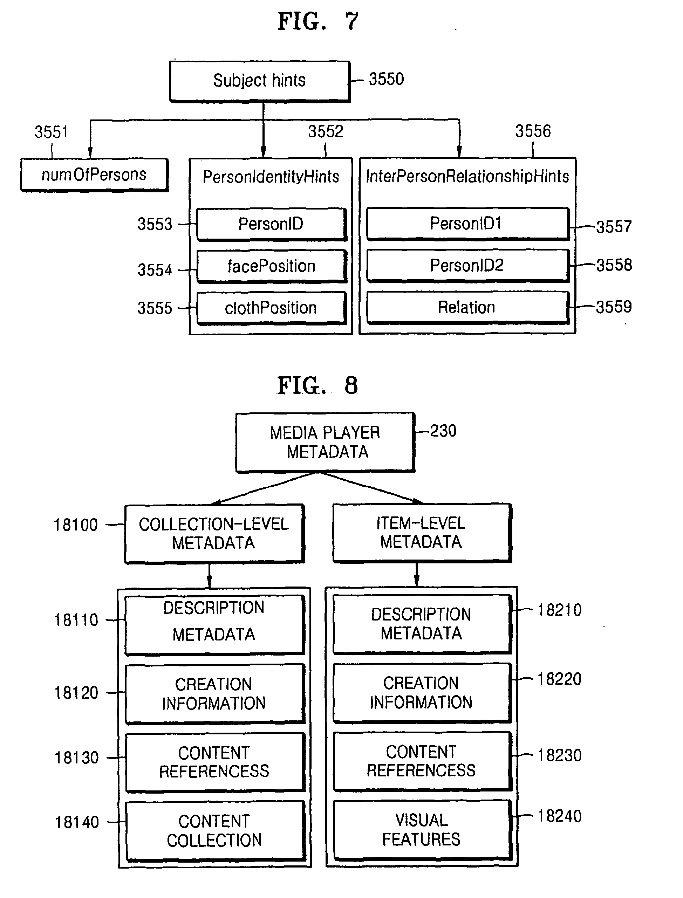

FIG. 7 illustrates a description structure of the subject hint item 3550 illustrated in FIG. 3 in detail according to an embodiment of the present invention.

Referring to FIG. 7, the subject hint item 3550 includes an item (numOfPersons) 3551 indicating the number of persons included in a photo, an item (PersonldentityHints) 3552 indicating the position information of each person included in a photo with the position of the face of the person and the position of clothes worn by the person, and an item (InterPersonRelationshipHints) 3556 indicating the relationship between persons included in a photo.

The item 3552 indicating the position information of the face and clothes of each person included in a photo includes an ID (PersonID) 3553, the face position (facePosition) 3554, and the position of clothes (clothPosition) 3555 of the person.

The item 3556 indicating the relationship between persons included in a photo includes IDs (PersonID1, PersonID2) 3557 and 3558 indicating two persons, and an item (relation) 3559 describing the relationship between the two person in an arbitrary format.

The following table 1 shows description structures, which express hint items required for photo albuming among hint items required for effective multimedia albuming, expressed in an extensible markup language (XML) format.

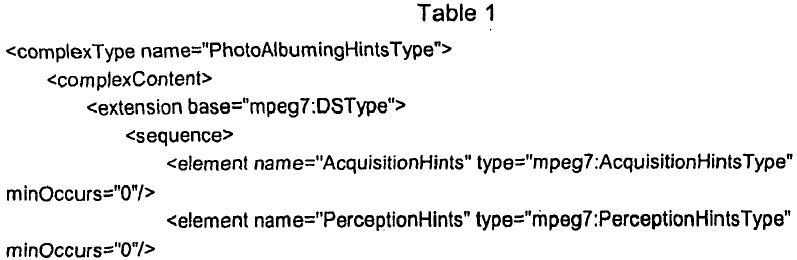

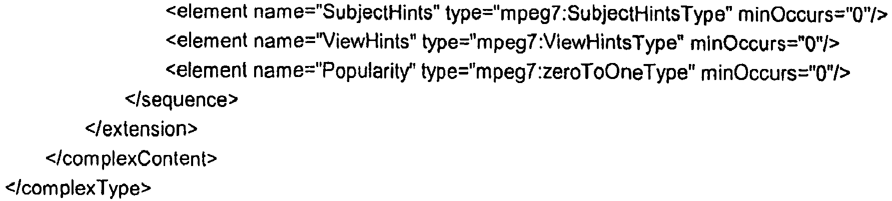

The following table 2 shows the description structure of the perceptional hint item 3510 indicating the perceptional characteristics of a human being in relation to the contents of a photo, among hint items required for photo albuming illustrated in table 1, expressed in an XML format.

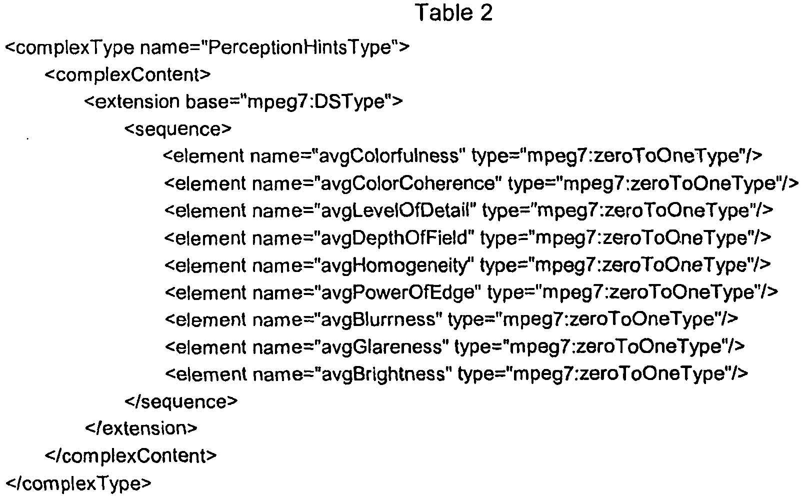

The following table 3 shows the description structure of the photo acquisition hint item 3520 indicating camera information and photographing information when a photo is taken, among hint items required for photo albuming illustrated in table 1, expressed in an XML format.

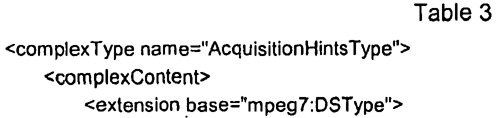

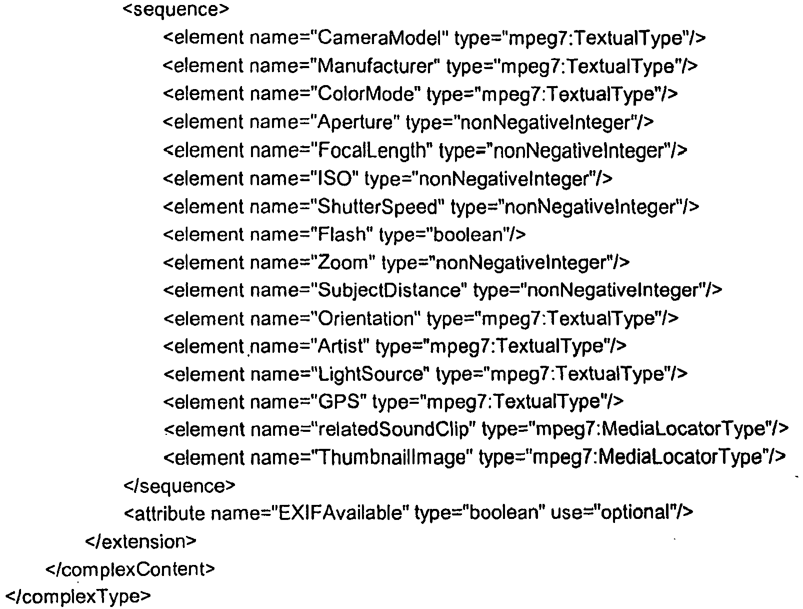

The following table 4 shows the description structure of the photo view hint item 3540 indicating view information of a photo, among hint items required for photo albuming illustrated in table 1, expressed in an XML format.

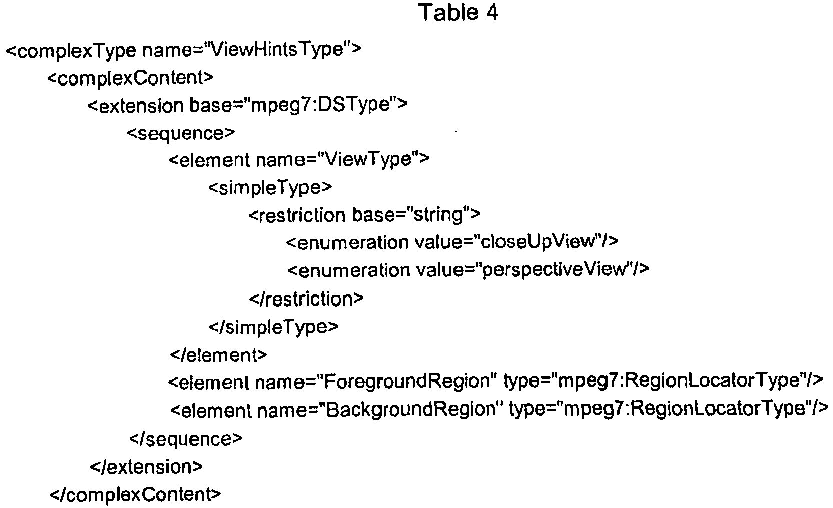

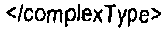

The following table 5 shows the description structure of the subject hint item 3550 to indicate information on persons included in a photo, among hint items required for photo albuming illustrated in table 1, expressed in an XML format.

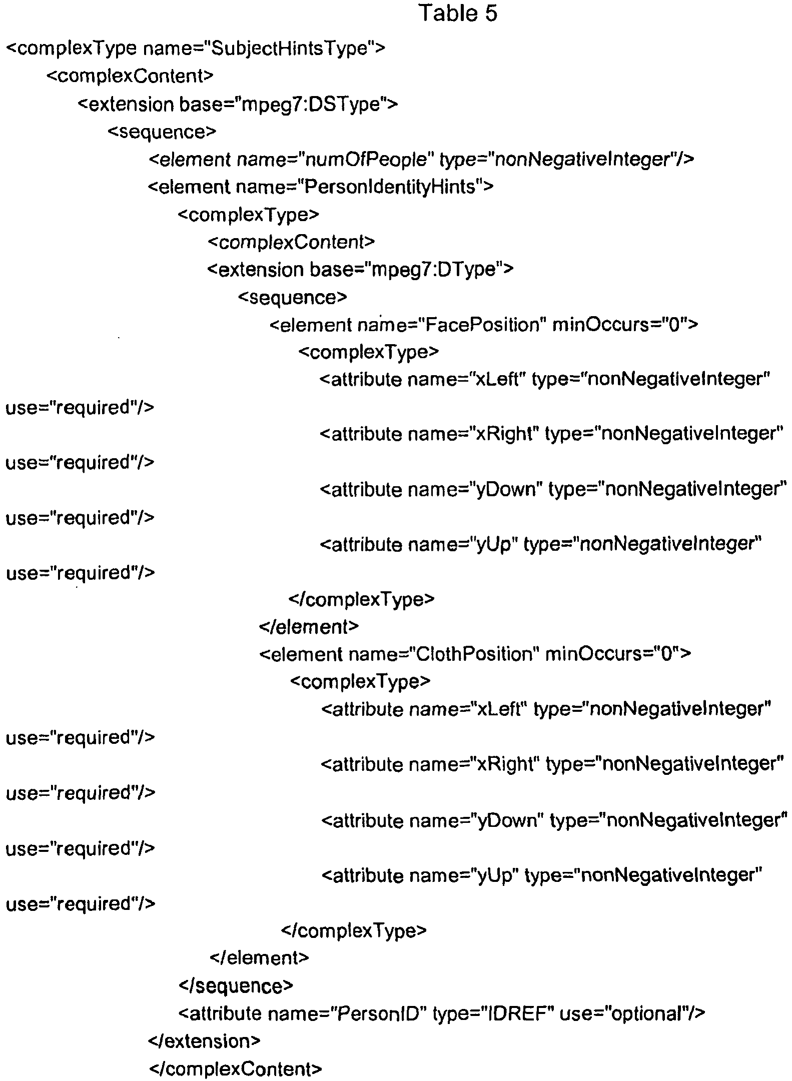

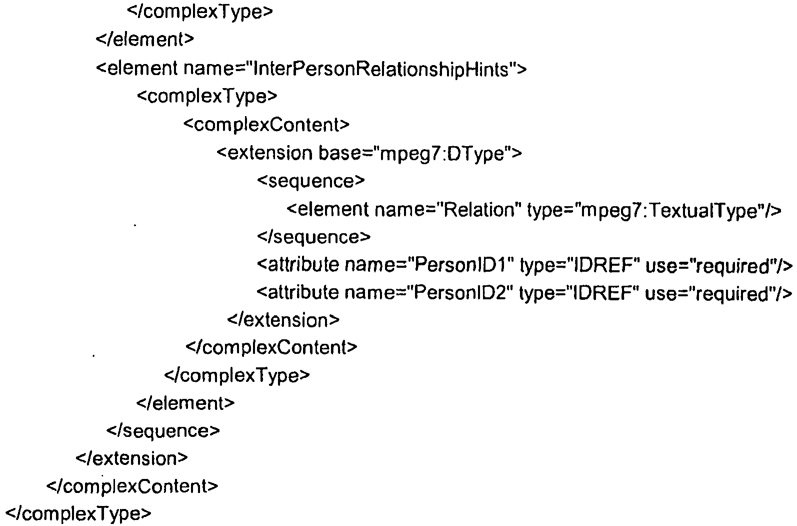

FIG. 8 illustrates a detailed structure of the media player metadata 230 of FIG. 2 according to an embodiment of the present invention.

Referring to FIG. 8, the media player metadata 230 includes collection-level description metadata 18100 for grouping of a plurality of photos and item-level description metadata 18200 for each photo.

The collection-level description metadata 18100 includes description metadata 18110 describing creation information of a corresponding metadata, creation information metadata 18120 describing creation information for a photo collection that is defined by metadata, content references metadata 18130 describing identification information about each photo in a photo collection that is defined by metadata, and a content collection metadata 18140 for a sub-level photo collection in a photo collection that is defined by metadata.

The item-level description metadata 18200 includes description metadata 18210 describing creation information of corresponding metadata, creation information metadata 18220 describing creation information for photos that are defined by metadata, content references metadata 18230 describing identification information about each photo that is defined by metadata, and visual features metadata 18240 for content-based visual features in photos that are defined by metadata.

Meanwhile, the collection-level description metadata is expressed by an ID of CreationInformation DS, or is expressed using "//CreationInformationDS/Classification/Genre" description scheme with a classification scheme which is newly defined. The classification scheme may be expressed as defined in table 6.

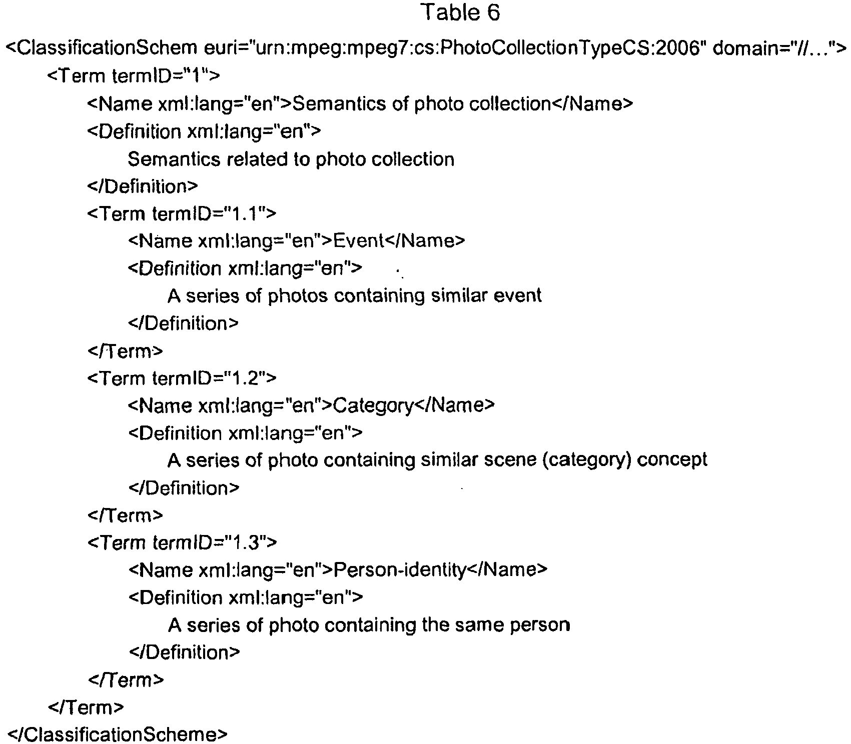

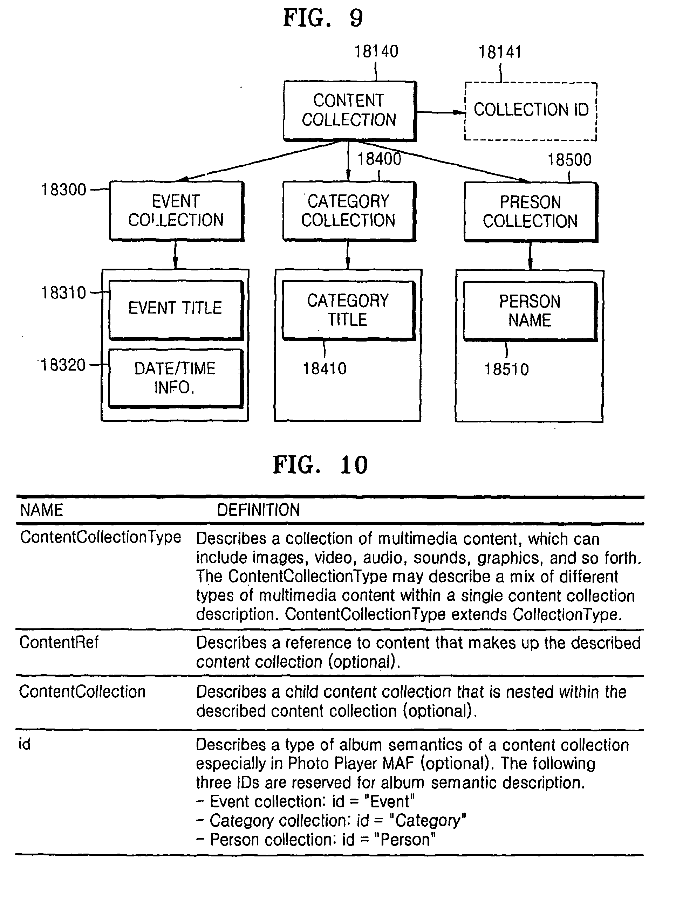

FIG. 9 is a block diagram of elements in the content collection metadata 18140 of FIG. 8.

Referring to FIG. 9, each piece of content collection metadata 18140 includes a unique collection ID 18141. The content collection metadata 18140 includes Event collection metadata 18300 for a photo collection of the same event, a Category collection metadata 18400 for a photo collection of the same category, and a Person collection metadata 18500 for a photo collection of the same person, according to a collection ID.

FIG. 10 is a chart of a structure of the collection ID 18141 of FIG. 8 on the basis of MPEG-7.

Referring to FIG. 10, the content collection metadata 18140 is expressed by a ContentCollection DS of MPEG-7. The collection ID 18141 is defined by "Event" representing a photo collection of the same event, "Category" representing a photo collection of the same category, and "Person" representing a photo collection of the same person. The collection ID 18141 is not limited to this. That is, the collection ID can be expressed by other original characters or numbers besides the above identifiers.

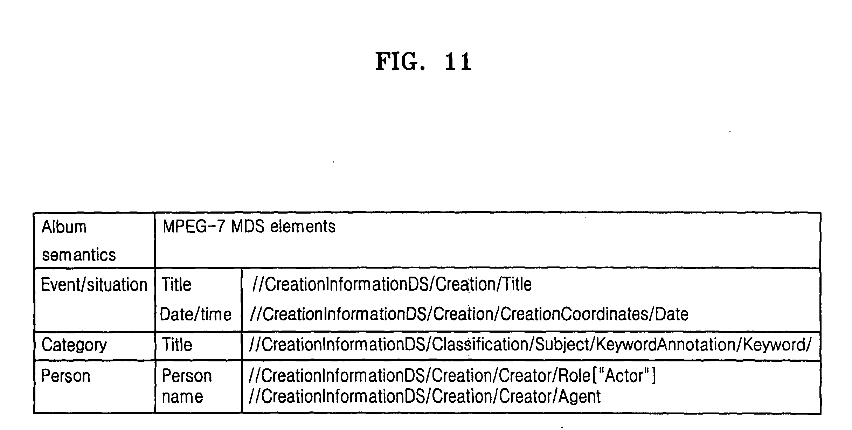

FIG. 11 illustrates a structure of essential elements of the content collection metadata 18140 of FIG. 9.

Referring to FIG. 11, the event collection metadata 18300 includes Title metadata for providing information on a title of a corresponding event collection and Date/time metadata for providing information on a photographing time of photos in a corresponding event collection. The Title metadata for providing information on a title can be expressed using "//CreationInformationDS/CreationlTitle" of MPEG-7 MDS. The Date/time metadata for providing information on a photographing time can be expressed using "//CreationInformationDS/Creation/CreationCoordinates/Date" of MPEG-7 MDS.

The following table 7 shows an example of mapping albuming semantics to MPEG-7 MDS.

**Table 7**

| | | | |
|---|---|---|---|
| Album semantics | MDS elements | | |
| Event/situation | Title | //CreationInformationDS/Creation/Title | |
| | Date/time | //CreationInformationDS/Creation/CreationCoordinates/Date | |
| Category | Title | //CreationInformationDS/Classitication/Subject/KeywordAnnotation/Keyword/ | |
| Person-identing | Person name e | //CreationInformationDS/Creation/Creator/Role["Actor"] | |
| | | //CreationInformationDS/Creation/Creator/Agent | |
| | | <Role href="creatorCS"> | |
| | | | <Name>Actor</Name> |
| | | </Role> | |
| | | <Agent xsi : type="PersonType"> | |
| | | | <Name> ... </Name> |
| | | </Agent> | |

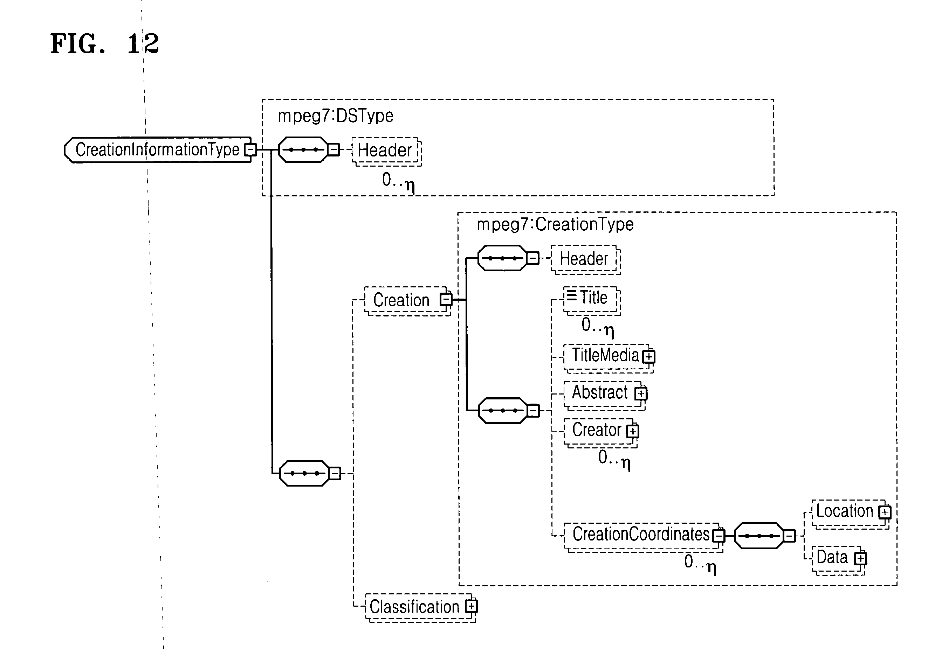

FIG. 12 illustrates a structure of the event collection metadata 18300 of FIG. 8 in an MPEG-7 schema form according to an embodiment of the present invention.

Referring to FIG. 12, the event collection 18300 metadata includes Title metadata for providing information on a title of a corresponding category collection. The Title metadata for providing information on a title may be expressed using "//CreationInformationDS/Clasification/Subject/KeywordAnnotation/Keyword//" of MPEG-7 MDS.

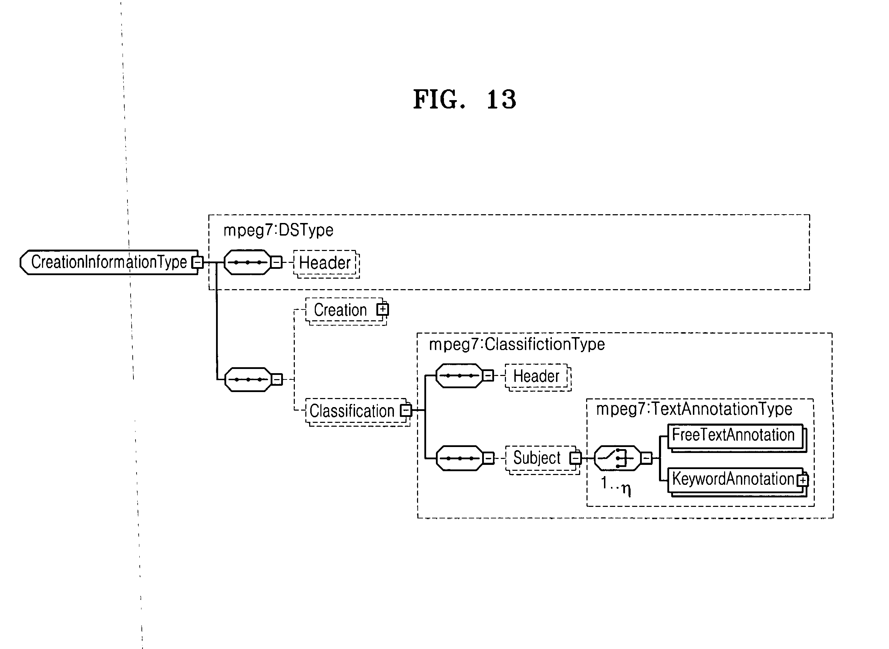

FIG. 13 illustrates a structure of the category collection metadata 18400 of FIG. 8 in an MPEG-7 schema form according to an embodiment of the present invention.

Referring to FIG. 13, the Category collection 18400 metadata includes a person name in a person collection, which is "//CreatinoInformationDS/Creation/Creator/Role" of MPEG-7 MDS, is represented in "Actor". A name of a corresponding person may be expressed using "//CreationInformationDS/Creation/Creator/Agent.

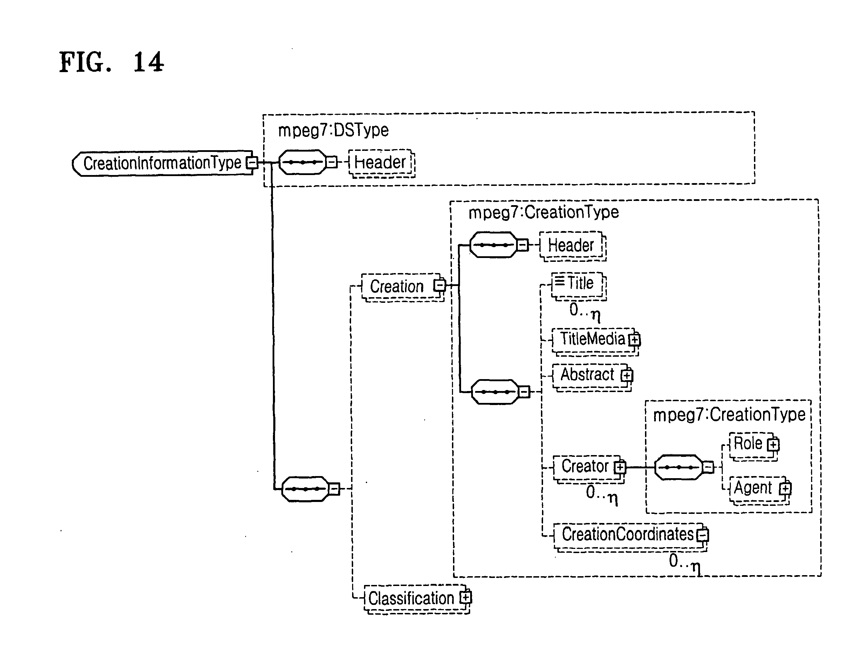

FIG. 14 illustrates a structure of the person collection metadata 18500 of FIG. 8 in an MPEG-7 schema form according to an embodiment of the present invention.

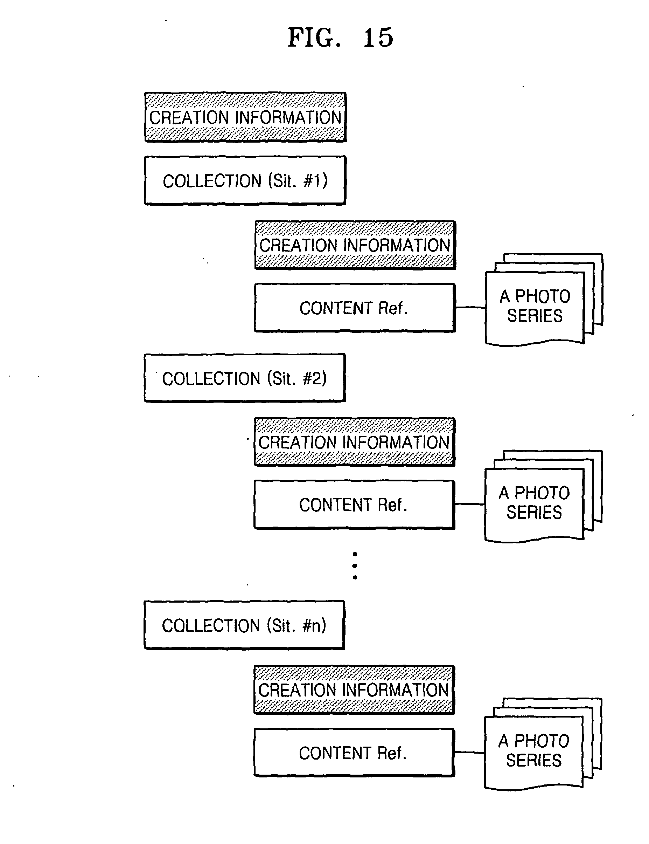

The following tables 8-1 and 8-2 represent the Event collection metadata in an XML format, and FIG. 15 illustrates elements of the event collection metadata. The schema for the Event collection metadata may be represented without any change in the original Photo Player MAF schema.

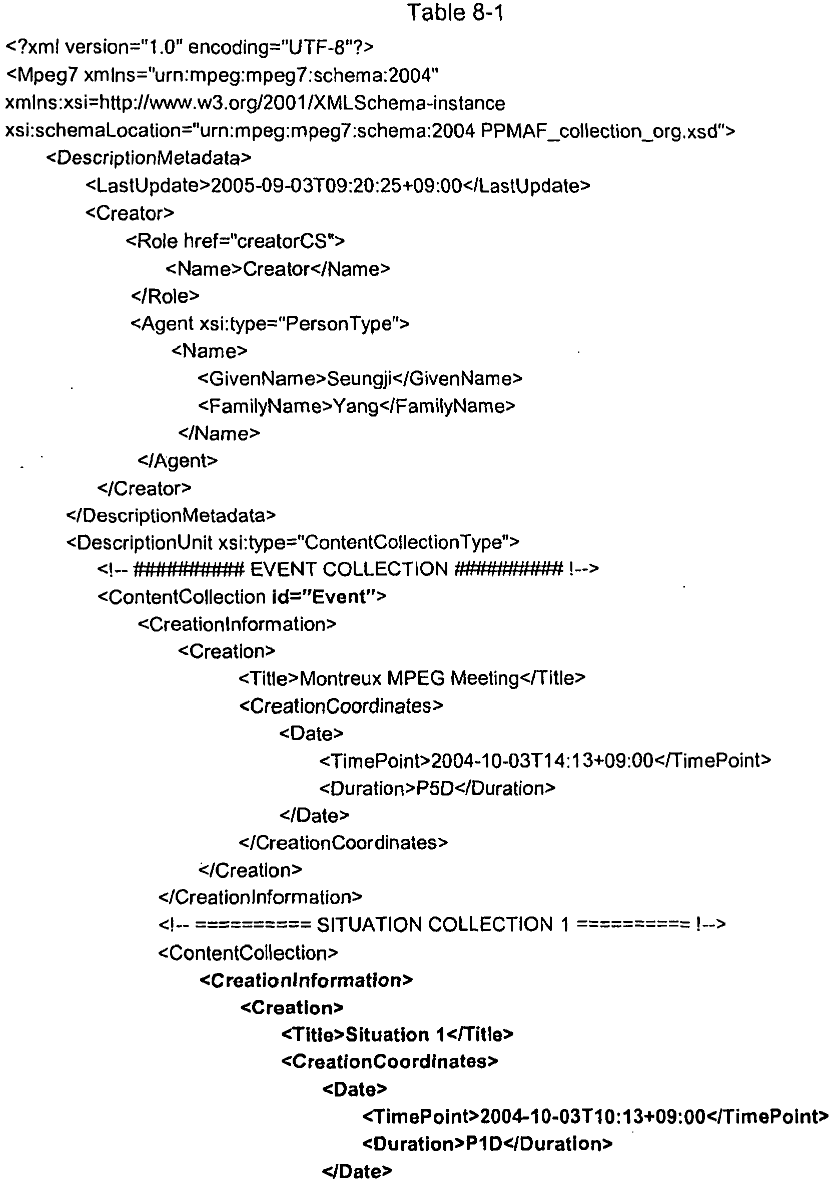

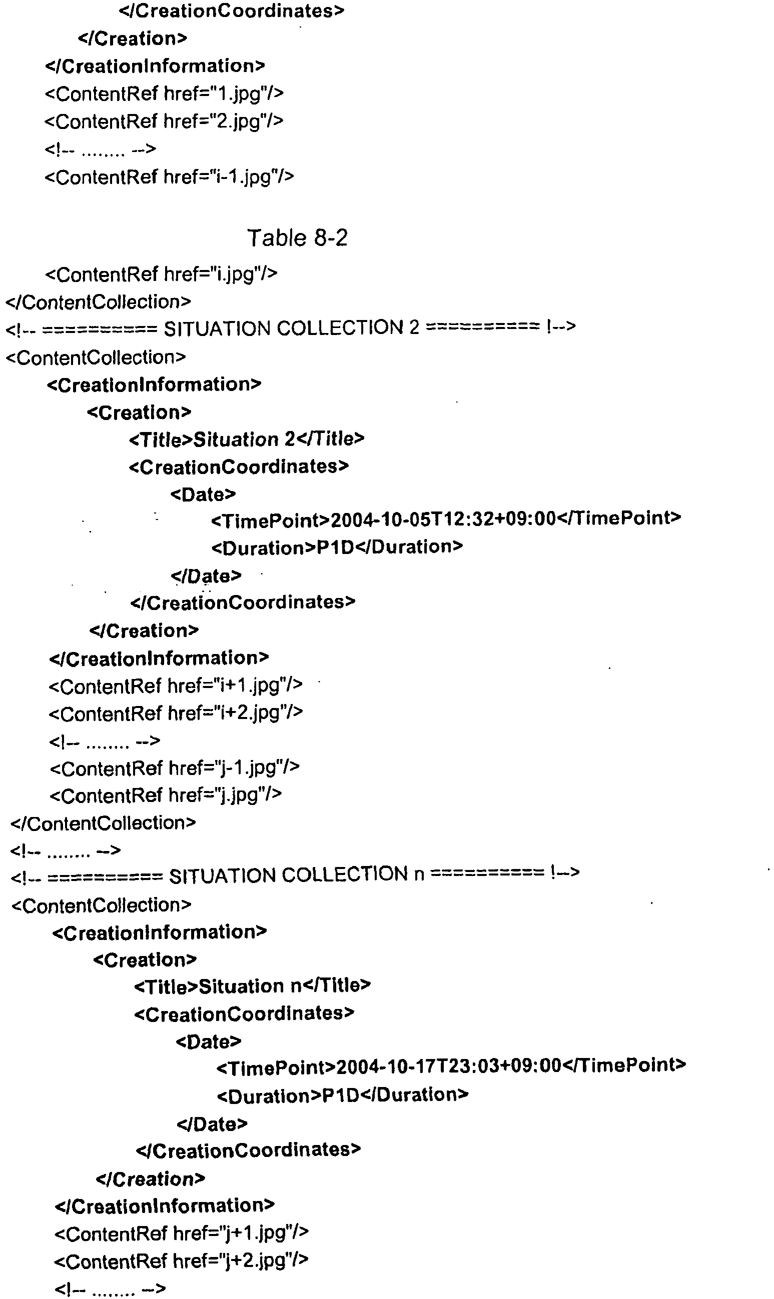

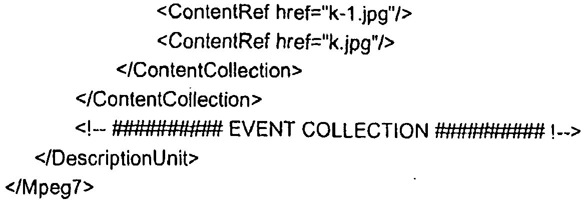

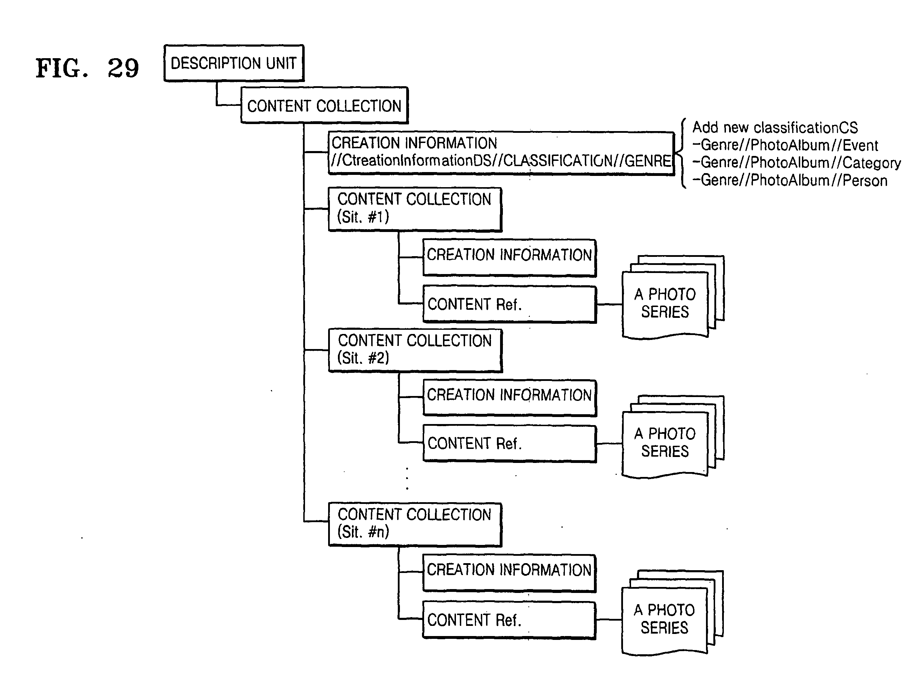

The following table 9 represents another example of the Event collection metadata in an XML format, based on the classification scheme defined in table 6, and FIG. 29 illustrates elements of the event collection metadata. The schema for the Event collection metadata may be represented without any change in the original Photo Player MAF schema.

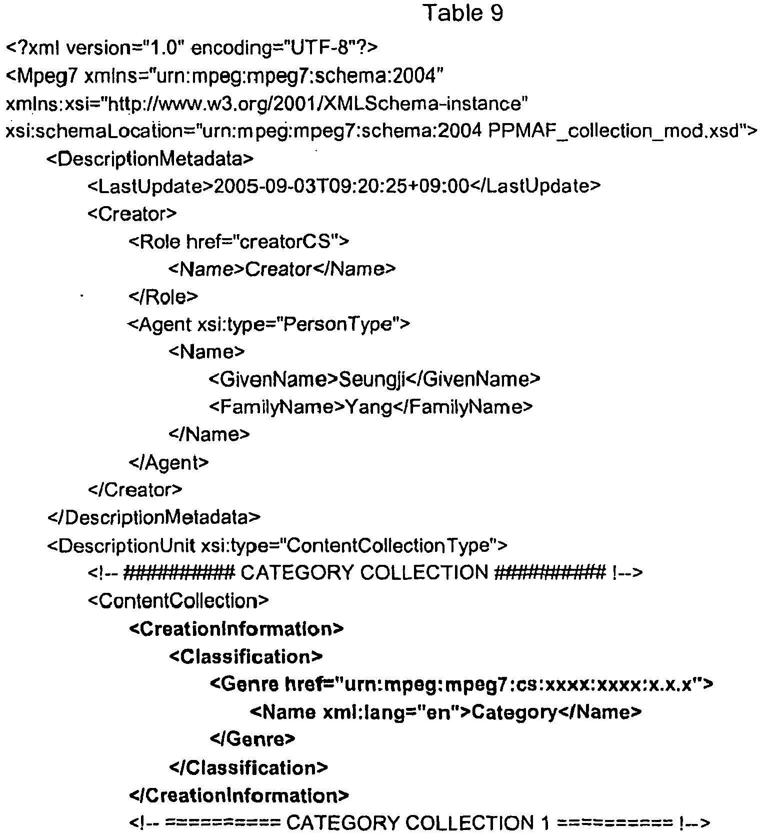

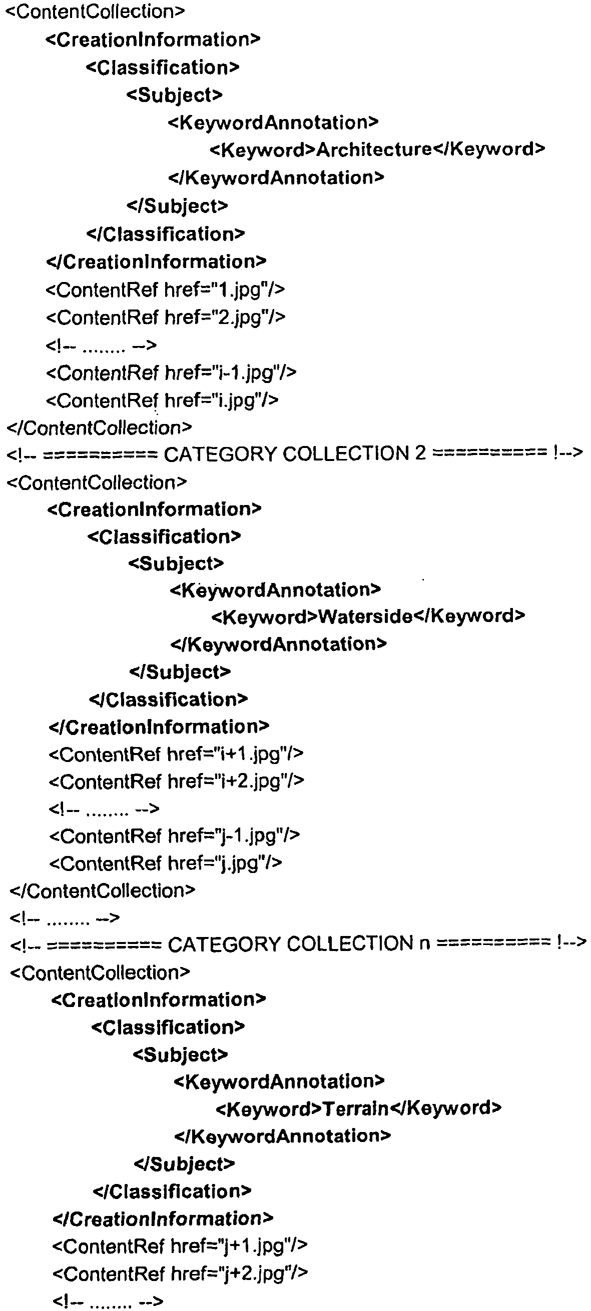

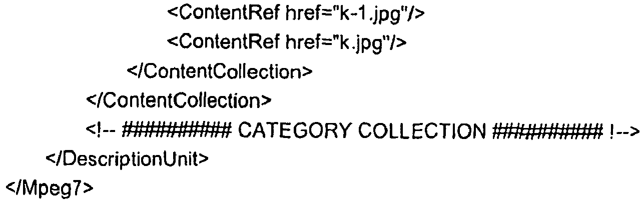

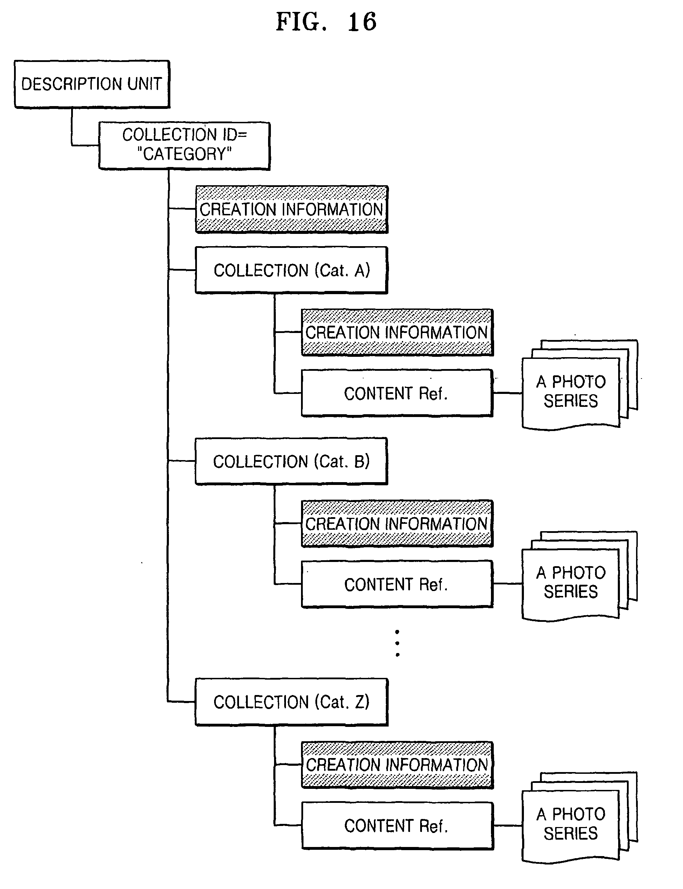

The following tables 10-1 and 10-2 represent the Category collection metadata in an XML format, and FIG. 16 illustrates elements of the Category collection metadata.

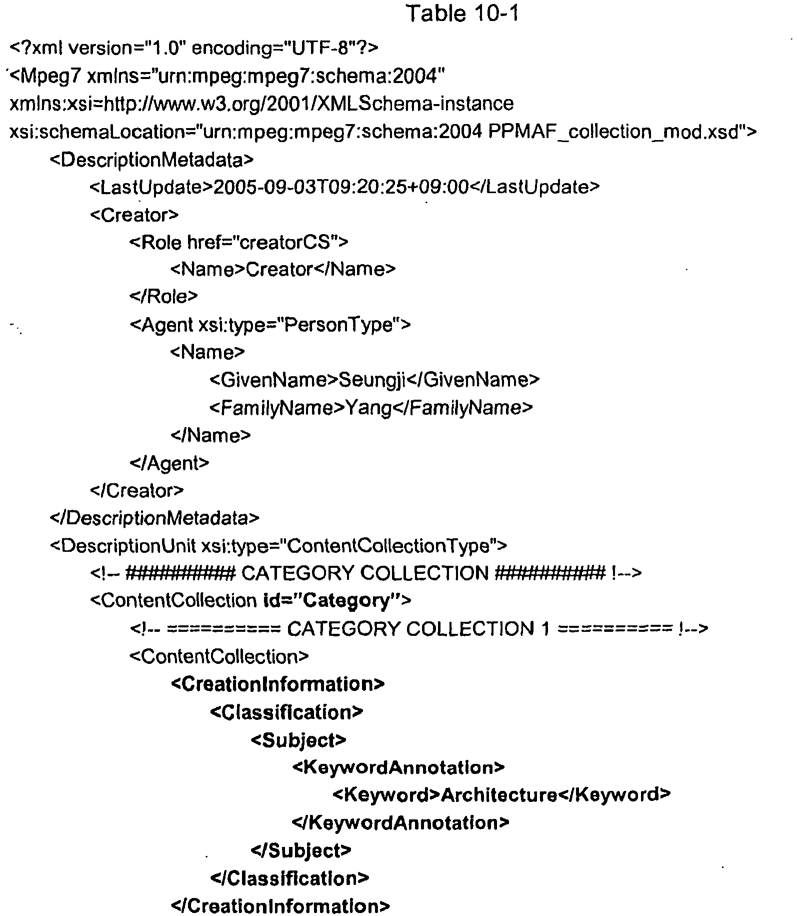

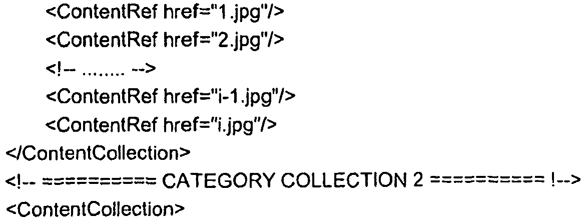

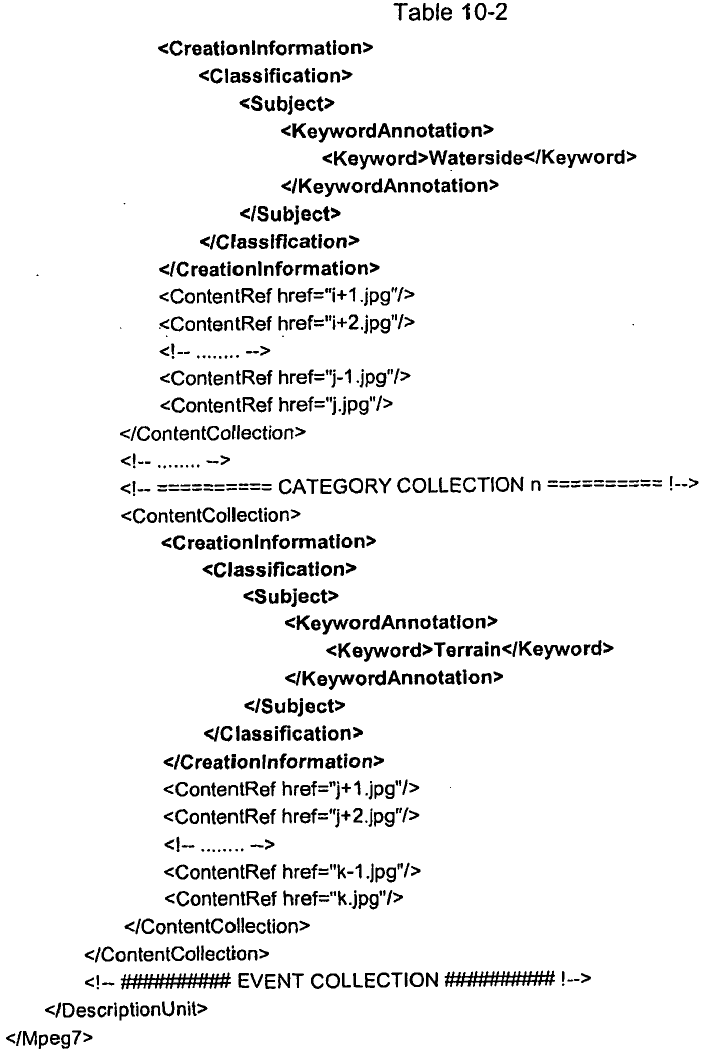

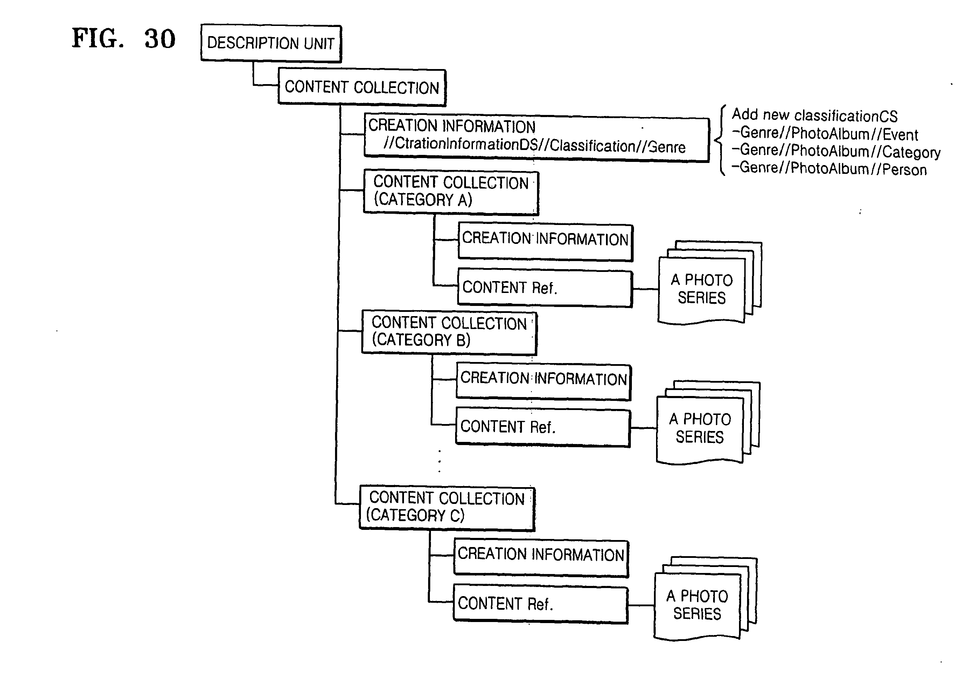

The following table 11 represents another example of the Category collection metadata in an XML format, based on the classification scheme defined in table 6, and FIG. 30 illustrates elements of the category collection metadata. The schema for the Category collection metadata may be represented by adding "//CreationInformationDS//Classification//Subject//KeywordAnnotation//" to the original Photo Player MAF schema.

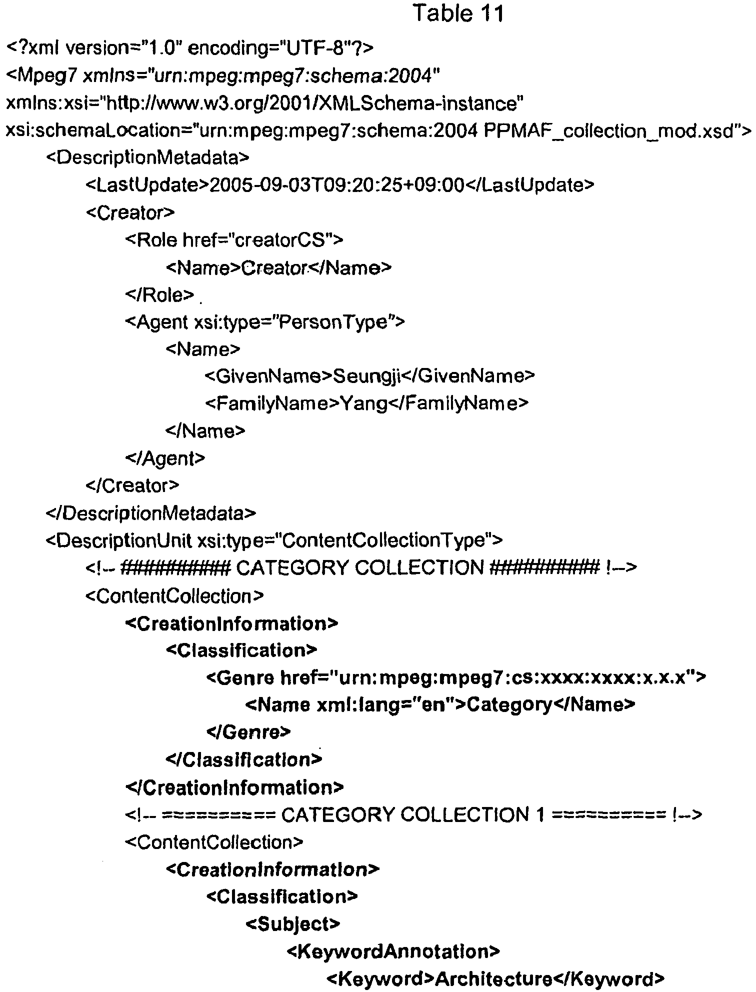

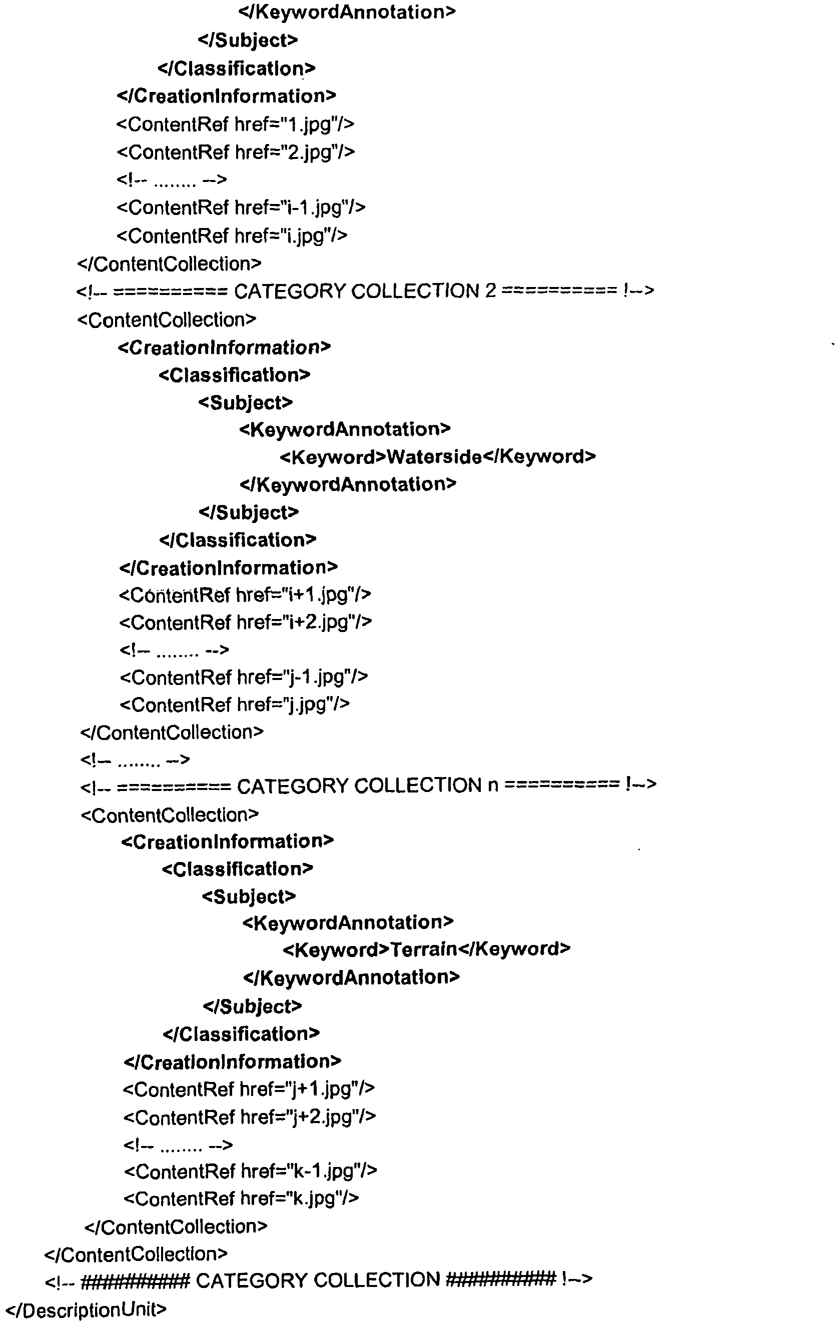

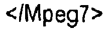

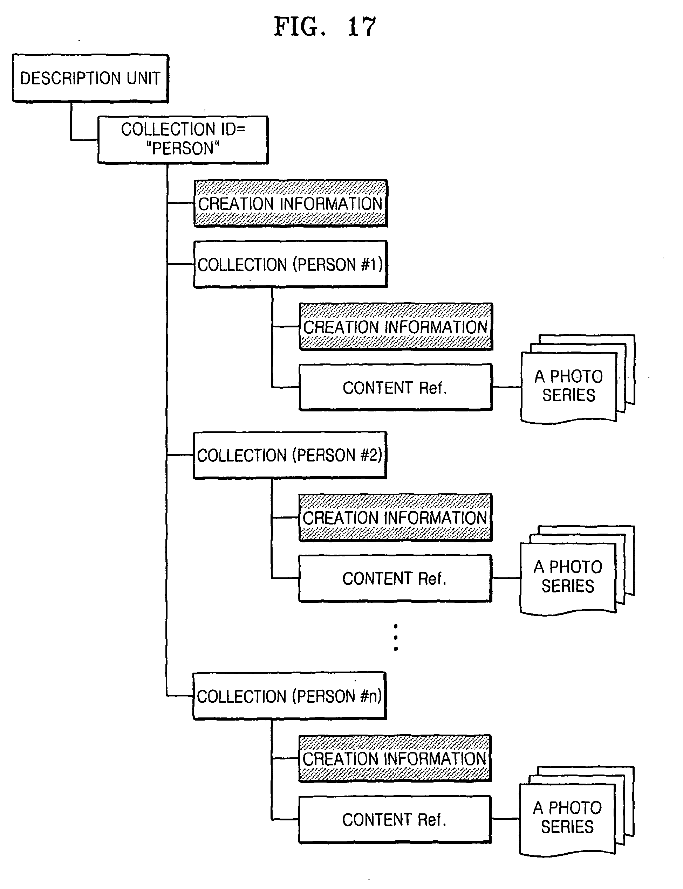

The following tables 12-1 and 12-2 represent the Person collection metadata in an XML format, and FIG. 17 illustrates elements of the Person collection metadata of FIG. 8 according to an embodiment of the present invention.

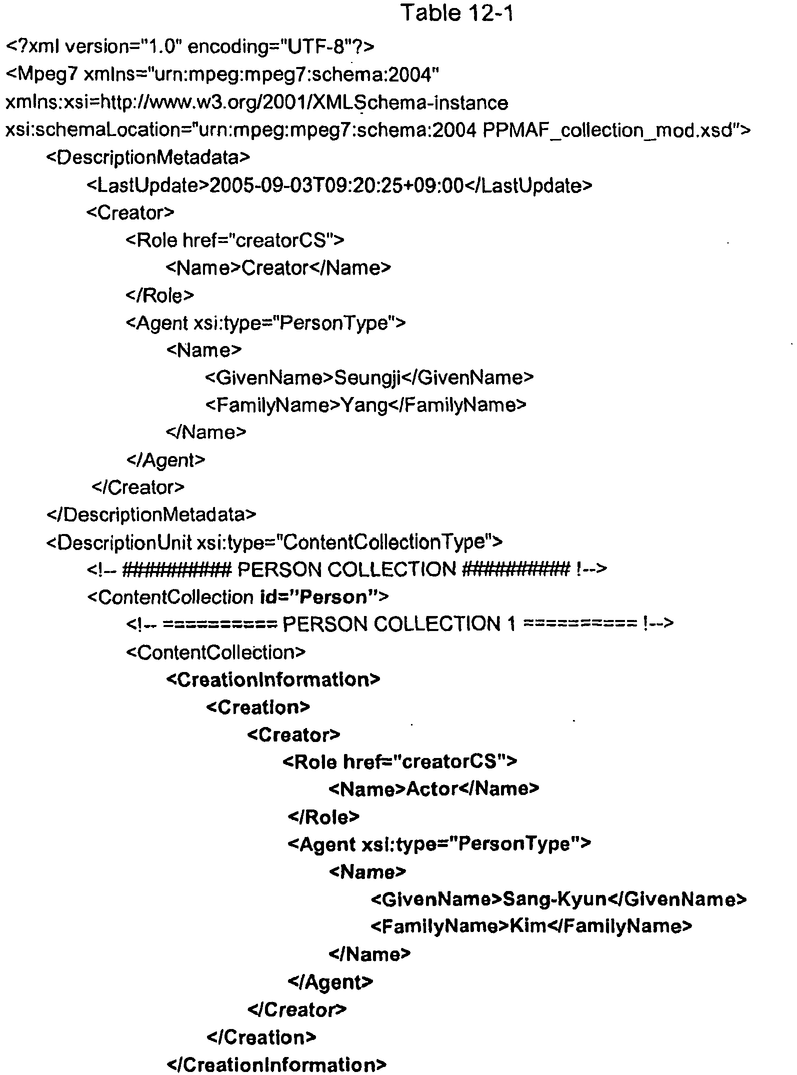

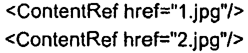

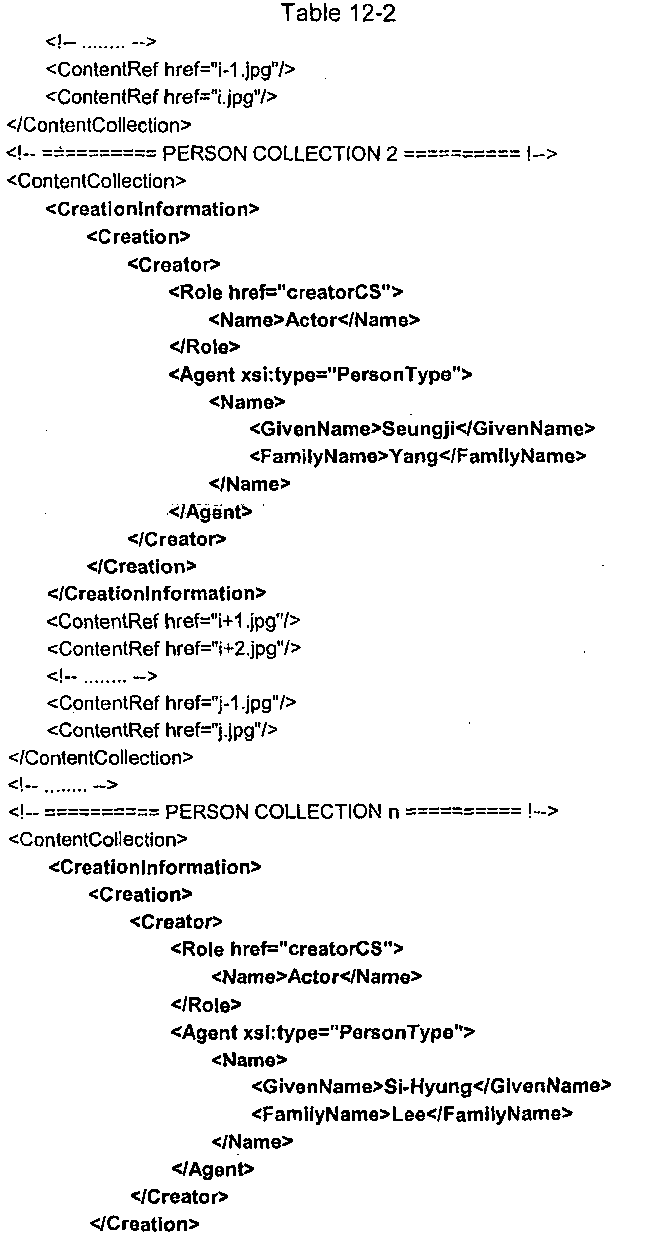

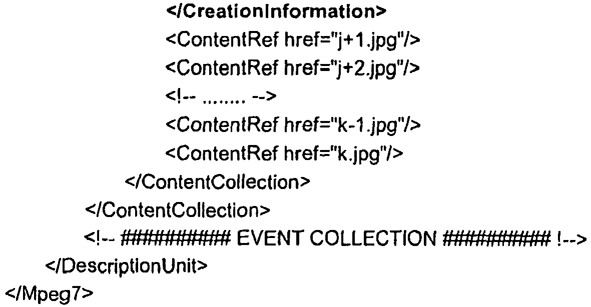

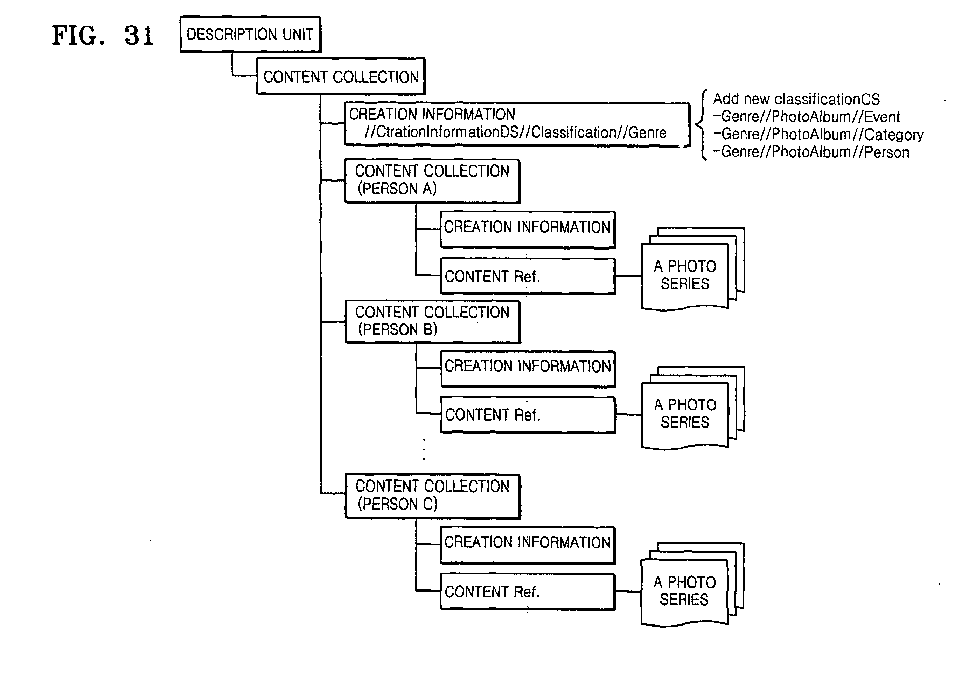

The following table 13 represents another example of the Person-identity collection metadata in an XML format, based on the classification scheme defined in table 6, and FIG. 31 illustrates elements of the person-identity collection metadata. The schema for the person-identity collection metadata may be represented by adding "//CreationInformationDS//Creation//Creator//' to the original Photo Player MAF schema.

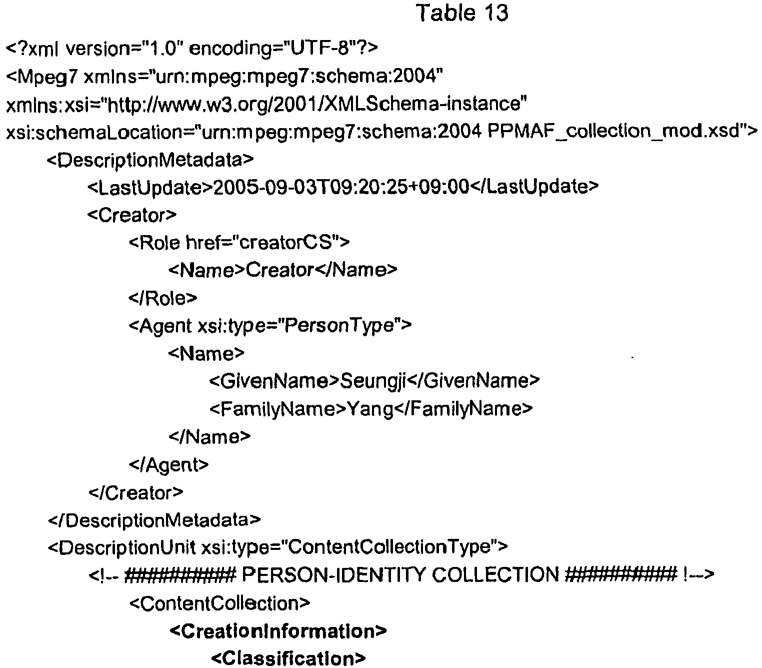

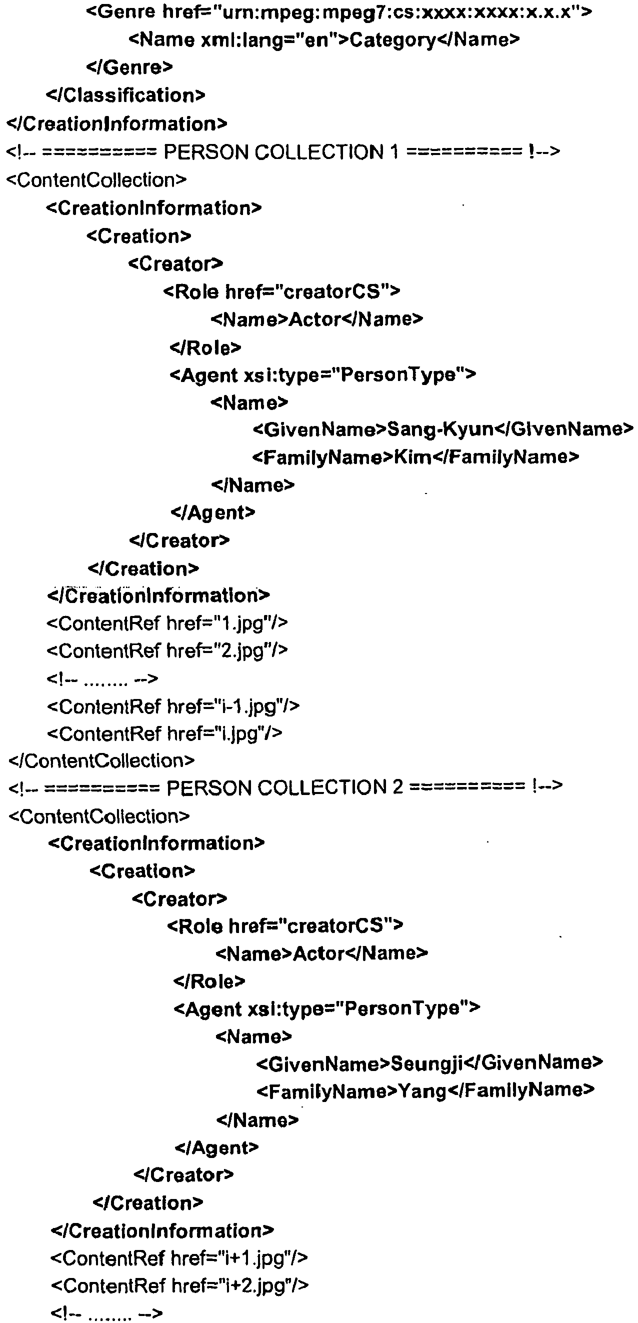

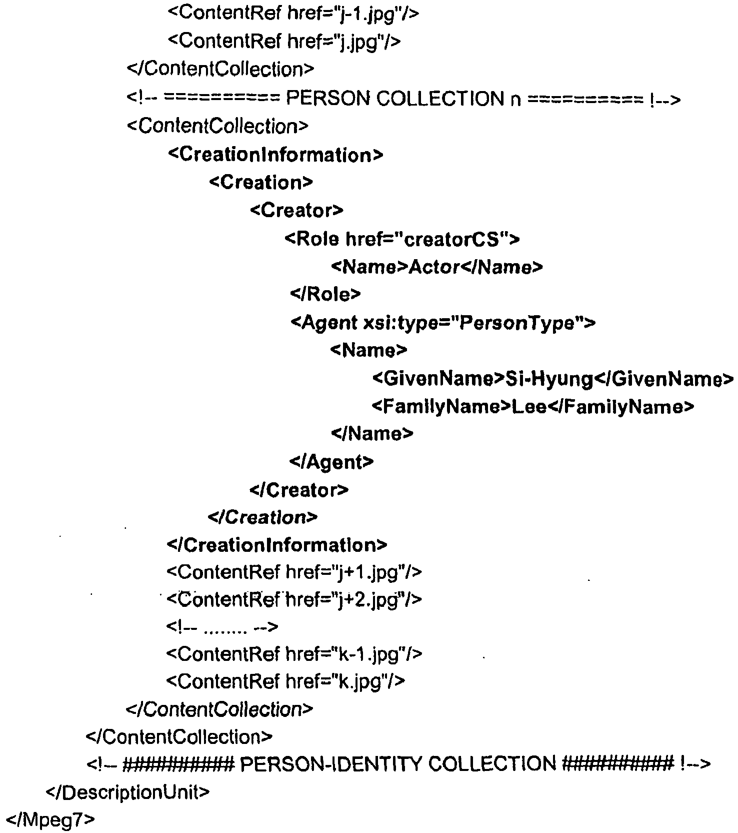

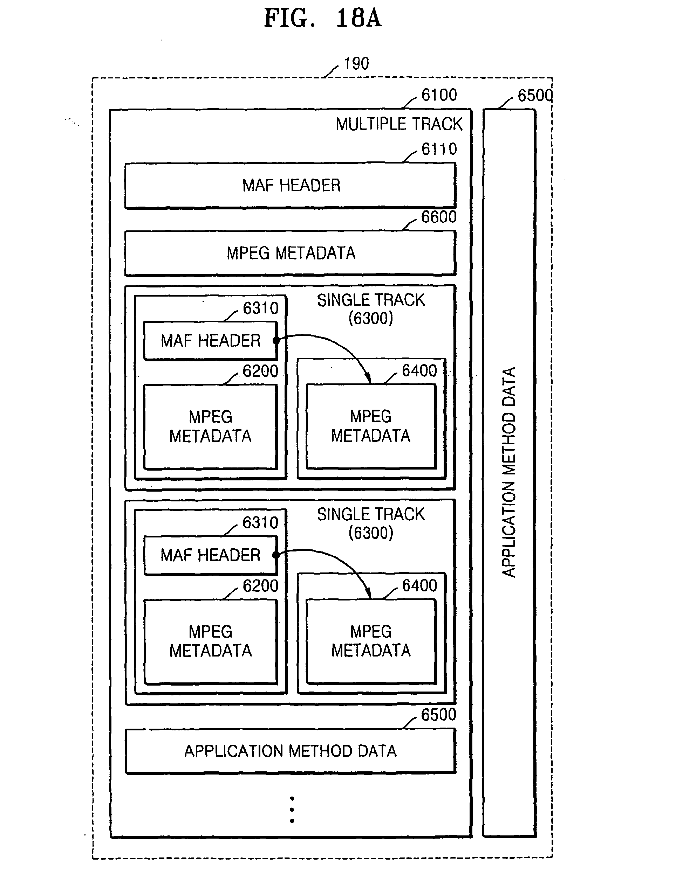

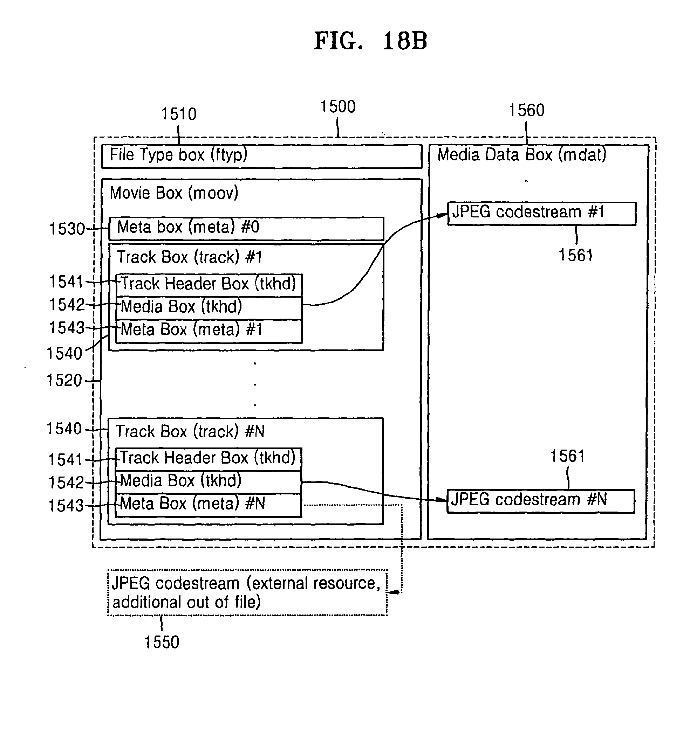

FIGS. 18A and 18B illustrate a detailed structure of an MAF file 190 created in the encoding unit 170 illustrated in FIG. 1 according to an embodiment of the present invention.

Referring to FIG. 18A , the MAF file includes, as a basic element, a single track MAF 6300 which is composed of one media content and final metadata corresponding to the media content. The single track MAF 6300 includes a header (MAF header) 6310 of the track, MPEG metadata 6200, and media data 6400. The MAF header 6310 is data indicating media data, and may comply with ISO basic media file format.

Meanwhile, an MAF file can be formed with one multiple track MAF 6100 which is composed of a plurality of single track MAFs 6300. The multiple track MAF 6100 includes one or more single track MAFs 6300, an MAF header 6110 of the multiple tracks, MPEG metadata 6600 in relation to the multiple tracks, and application method data 6500 of the MAF file. In the current embodiment, the application method data 6500 is included in the multiple tracks 6100. In another embodiment, the application method data 6500 may be input independently to an MAF file.

FIG. 18B illustrates a detailed structure of an MAF file 190 created in the encoding unit 170 illustrated in FIG. 1 according to another embodiment of the present invention. The MAF file 1500 illustrated in FIG. 18B uses an MPEG-4 file format in order to include a JPEG resource and related metadata as in FIG. 18A. Most of the elements illustrated in FIG. 18B are similar to those illustrated in FIG. 18A. For example, a part (File Type box) 1510 indicating the type of a file corresponds to the MAF header 1420 illustrated in FIG. 4, and a part (Meta box) 1530 indicating metadata in relation to a collection level corresponds to MPEG metadata 1430 illustrated in FIG. 4.

Referring to FIG. 18B, the MAF file 1500 is broadly composed of the part (File Type box) 1510 indicating the type of a file, a part (Movie box) 1520 indicating the metadata of an entire file, i.e., the multiple tracks, and a part (Media Data box) 1560 including internal JPEG resources as a JPEG code stream 1561 in each track.

Also, the part (Movie box) 1520 indicating the metadata of the entire file includes, as basic elements, the part (Meta box) 1530 indicating the metadata in relation to a collection level and a single track MAF (Track box) 1540 formed with one media content and metadata corresponding to the media content. The single track MAF 1540 includes a header (Track Header box) 1541 of the track, media data (Media box) 1542, and MPEG metadata (Meta box) 1543. MAF header information is data indicating media data, and may comply with an ISO basic media file format. The link between metadata and each corresponding internal resource can be specified using the media data 1542. If an external resource 1550 is used instead of the MAF file itself, link information to this external resource may be included in a position specified in each single track MAF 1540, for example, may be included in the media data 1542 or MPEG metadata 1543.

Also, a plurality of signal track MAFs 1540 may be included in the part (Movie box) 1520 indicating the metadata of the entire file. Meanwhile, the MAF file 1500 may further include data on the application method of an MAF file as illustrated in FIG. 4. At this time, the application method data may be included in multiple tracks or may be input independently into an MAF file.

Also, in the MAF file 1500, descriptive metadata may be stored using metadata 1530 and 1543 included in Movie box 1520 or Track box 1540.

The metadata 1530 of Movie box 1520 can be used to define collection level information and the metadata 1543 of Track box 1540 can be used to define item level information. All descriptive metadata can be used using an MPEG-7 binary format for metadata (BiM) and the metadata 1530 and 1543 can have an mp7b handler type. The number of Meta box for collection level descriptive metadata is 1, and the number of Meta boxes for item level description metadata is the same as the number of resources in the MAF file 1500.

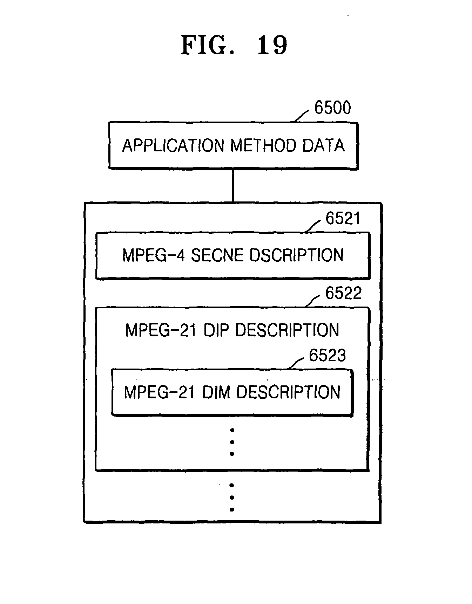

FIG. 19 illustrates a detailed structure of application method data 6500 created in the application method data creation unit 180 illustrated in FIG. 1 according to an embodiment of the present invention.

Referring to FIG. 19, the media application method data 6500 is a major element of a media application method, and includes an MPEG-4 scene descriptor (scene description) 6521 to describe an albuming method defined by a description tool for media albuming and a procedure and method for media reproduction, and an MPEG-21 digital item processing descriptor (MPEG-21 DIP description) 6522 in relation to digital item processing (DIP) complying with a format and procedure intended for a digital item. The digital item processing descriptor includes a descriptor (MPEG-21 digital item method) 6523 for a method of basically applying a digital item. The present invention is characterized in that it includes the data as the media application method data 6500, but elements included in the media application method data 6500 are not limited to the data.

Metadata and application method data related to media data are transferred to the encoding unit 170 and created as one independent MAF file 190.

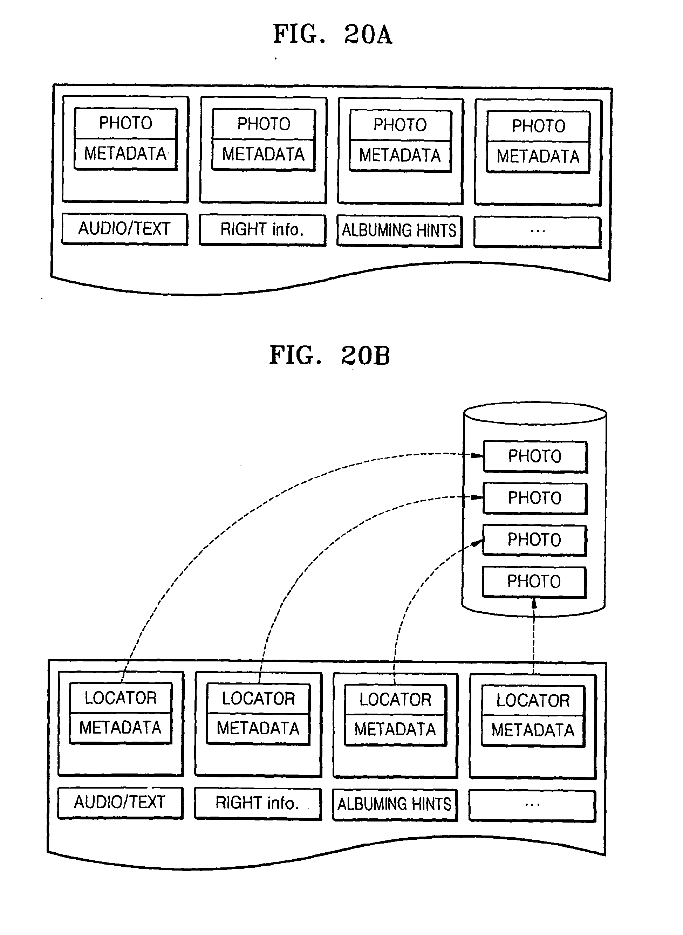

FIGS. 20A and 20B illustrate examples of MAF files 190 created in the encoding unit 170 illustrated in FIG. 1 according to an embodiment of the present invention.

FIG. 20A illustrates a case where media data, that is, photo data, physically exists in an MAF file, and FIG. 20B illustrates a case where photo data does not exists in an MAF file and instead, the photo data is replaced by a locator indicating the position of another physical or logical storage apparatus in which the photo data exists.

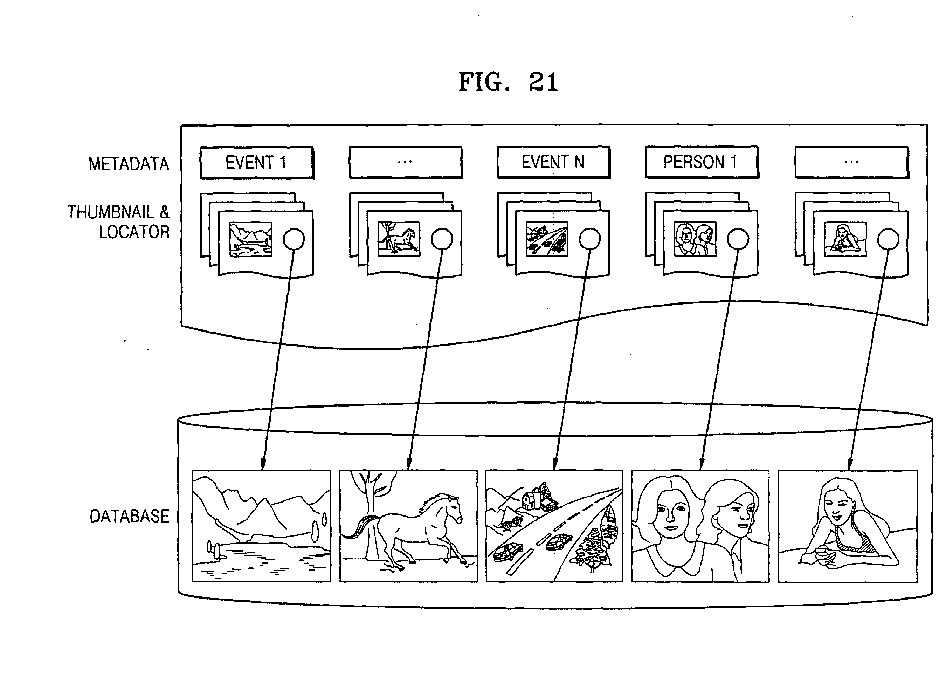

FIG. 21 illustrates an MAF file created in the encoding unit 170 illustrated in FIG. 1, the MAF file further including thumbnail images according to another embodiment of the present invention.

Referring to FIG. 21, in the case as illustrated in FIG. 20B where photo data does not exists in an MAF file and instead, the photo data is replaced by a locator indicating the position of another physical or logical storage apparatus in which the photo data exists, thumbnail images are further included in the MAF file and thus, even though a user does not read the original image, high speed browsing is enabled using the small-sized thumbnail images.

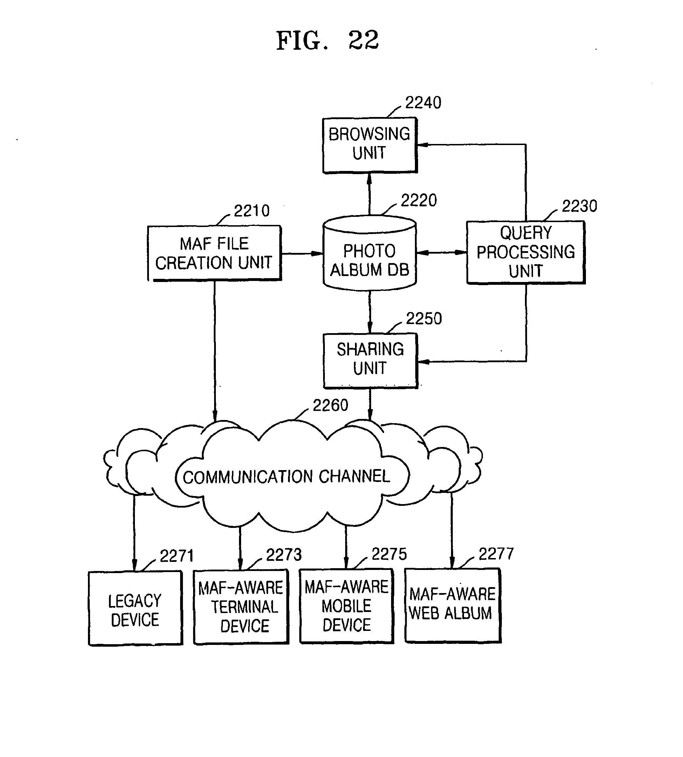

FIG. 22 is a block diagram of a structure of a system for applying multimedia contents according to an embodiment of the present invention. In an embodiment of the present invention, the system for applying multimedia contents includes an MAF file creation unit 2210, a media album database 2220 and a browsing unit 2240. In another embodiment of the present invention, the system for applying encoded multimedia contents includes an MAF file creation unit 2210, a media album database 2220, and a sharing unit 2250. In still another embodiment of the present invention, the system for applying encoded multimedia contents includes an MAF file creation unit 2210, a media album database 2220, a browsing unit 2240, and a sharing unit 2250. Each embodiment of the system for applying encoded multimedia contents can further include a query processing unit 2230.

Referring to FIG. 22, the MAF file creation unit 2210 creates an MAF file which includes at least one single track including a header containing information indicating media data, media data and media metadata, and application data indicating information on the application method of the media data.

The media album database 2220 stores the MAF file created in the MAF file creation unit 2210. The MAF file stored in the media album database 2220 is provided to the browsing unit 2240 and the sharing unit 2250 according to a request from the user.

The query processing unit 2230 retrieves an MAF file which the user desires to browse or share. At this time, metadata of each MAF file stored in the media album database 2220 is parsed so that MAF files matching with the user's query are found.

In an embodiment of the present invention, the created photo album MAF file is transmitted to other devices through a communication channel 2260. Here, the communication channel 2260 includes wired and/or wireless Internet, a mobile communication network, and a Bluetooth channel, and also includes a physical connection, such as a universal serial bus (USB) apparatus.

An example of the device to which the MAF file is transmitted may include any one of a legacy device 2271 which can recognize the MAF but does not provide full compatibility, an MAF-aware terminal device 2273 which fully recognizes the MAF, an MAF-aware mobile device 2275 which fully recognizes the MAF, and an MAF-aware web album 2277 which fully recognizes the MAF.

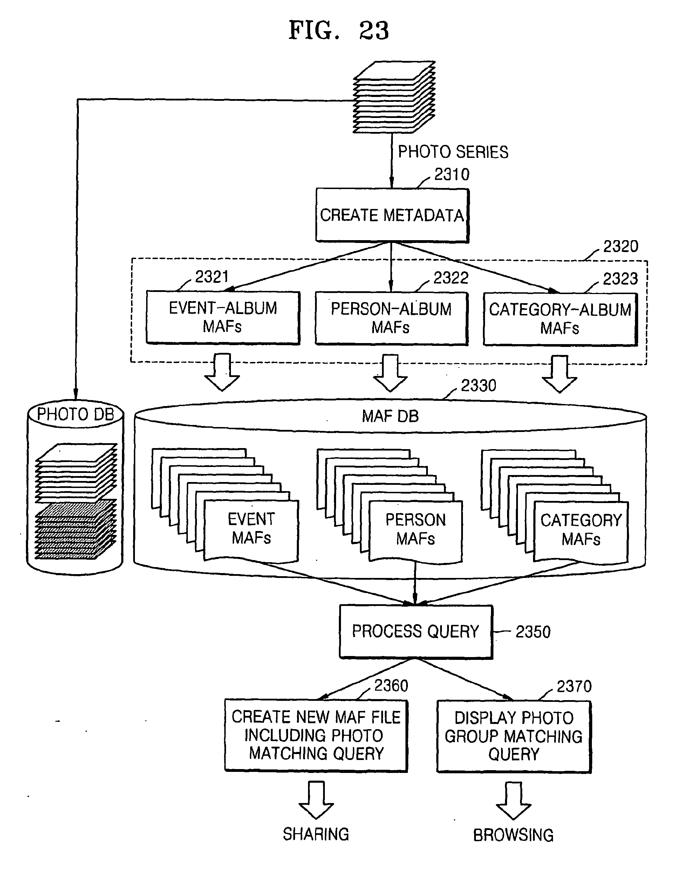

FIG. 23 illustrates a process of interoperating browsing and sharing functions of an MAF file with a database in the structure illustrated in FIG. 22 according to an embodiment of the present invention.

Referring to FIG. 23, the MAF file creation unit 2210 illustrated in FIG. 22 creates first through third MAF files of types different from each other, and stores the files in an MAF database 2330. The first MAF file is an event MAF file in which photos are grouped in units of events and photos of an identical event are stored as an integrated MAF file. The second MAF file is a person MAF file in which photos are grouped based on persons and photos including an identical person are stored as an integrated MAF file. The third MAF file is a category MAF file in which photos are grouped based on categories and photos belonging to an identical category are stored as an integrated MAF file. In the embodiment of the present invention, the MAF file creation unit 2210 creates the first through third MAF files described above, but files created by the MAF file creation unit 2210 are not limited to these files. That is, MAF files of two or more types may be integrated into one MAF file or an MAF file of a new type may also be included.

If photo data is stored in each MAF file of the MAF database 2330, redundancy of photo data occurs. Accordingly, photo data is stored in a separate photo database (Photo DB) 2340 and in each MAF file of the MAF database 2330, metadata and locators indicating the photos of the photo database 2340 are included.

Then, an input query of the user is processed in operation 2350, a new MAF file including a photo matching with the user's query is created and shared in operation 2360 or a photo collection matching with the user's query is browsed in operation 2370.

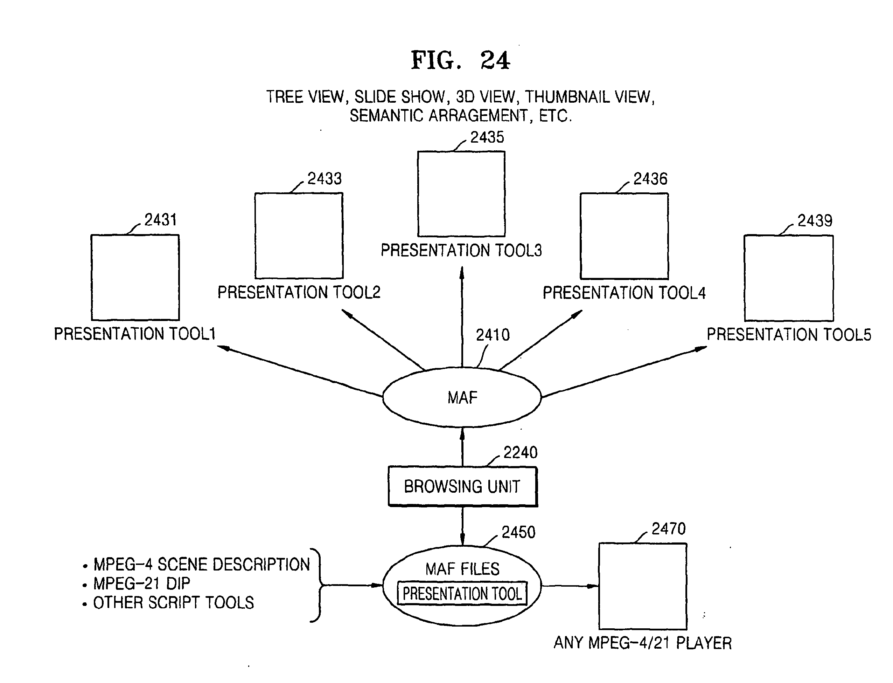

FIG. 24 illustrates a process of browsing a photo album MAF file through different album apparatuses 2431, 2433, 2435, 2437, 2439, and 2470 from the browsing unit 2240 according to an embodiment of the present invention.

Referring to FIG. 24, the MAF file 2410 of the current embodiment may include a presentation tool, which expresses photos systematically based on metadata, in the MAF file 2410. Leading presentation tools applied may include an MPEG-4 scene descriptor and a presentation tool using the MPEG-21 DIP, but the presentation tools are not limited to these. Meanwhile, if a presentation tool does not exist in the MAF file 2450, a presentation tool of an application that the user has is used in order to enable photo browsing.

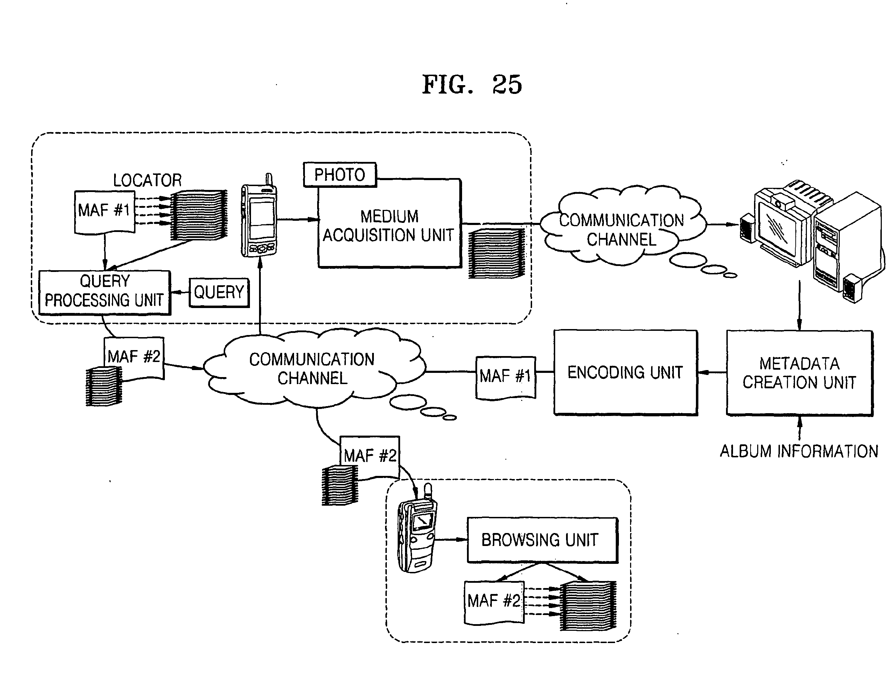

FIG. 25 illustrates browsing a photo on a mobile album apparatus using a photo album MAF file according to an embodiment of the present invention.

Referring to FIG. 25, according to the current embodiment, when a small-sized mobile album apparatus, such as a mobile phone, has a performance not enough to generate metadata, obtained photo data is transmitted to an album server of a high performance so that metadata can be created. Then, the data is received again as a photo album MAF file (MAF #1) and thus based on the metadata, photos can be effectively browsed. The user can edit part of the received MAF file to generate a new MAF file (MAF #2) and can transmit the new MAF file to other users.

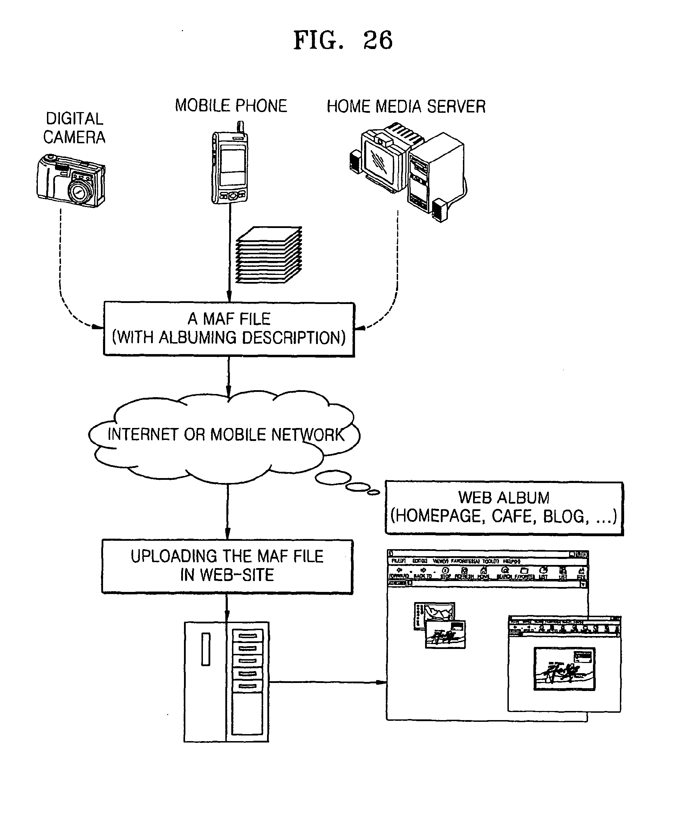

FIG. 26 illustrates browsing a photo on a web album apparatus using a photo album MAF file according to an embodiment of the present invention.

Referring to FIG. 26, files are obtained from a variety of image pickup apparatuses and encoded as photo album MAF files. Then, the photo album MAF files are transmitted to the web album apparatus through the Internet. Examples of the web album apparatus includes a personal homepage, a blog, an Internet cafe, but are not limited to these.

According to a method of applying a photo album MAF file in a web album apparatus according to an embodiment of the present invention, when a great number of photos included in the photo album MAF are desired to be stored in the web album apparatus, one MAF file is transmitted to the web album apparatus and the web album apparatus extracts metadata from the transmitted MAF file and automatically performs categorization.

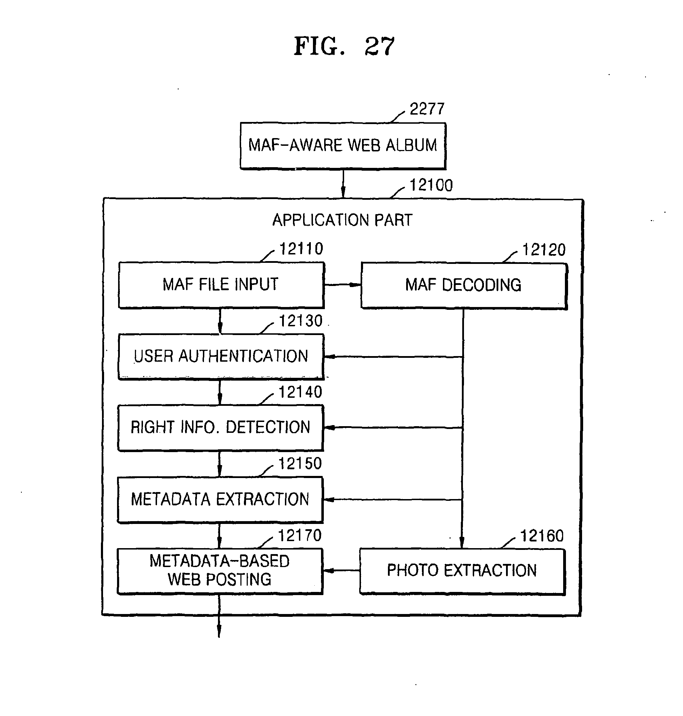

FIG. 27 illustrates a procedure of applying a photo album MAF file on an application processing unit 12100 of a web album apparatus according to an embodiment of the present invention.

Referring to FIG. 27, if an MAF file is input into the application processing unit 12100, the MAF file is decoded in operation 12130 and by using the decoded metadata, user authentication is performed in operation 12130. If the user is authenticated, user's right over a photo album (view, print, copy) is read in operation 12140. Metadata is extracted according to the read right in operation 12150, and by using the extracted metadata, photos are extracted in operation 12160, and photos are uploaded on a website in operation 12170.

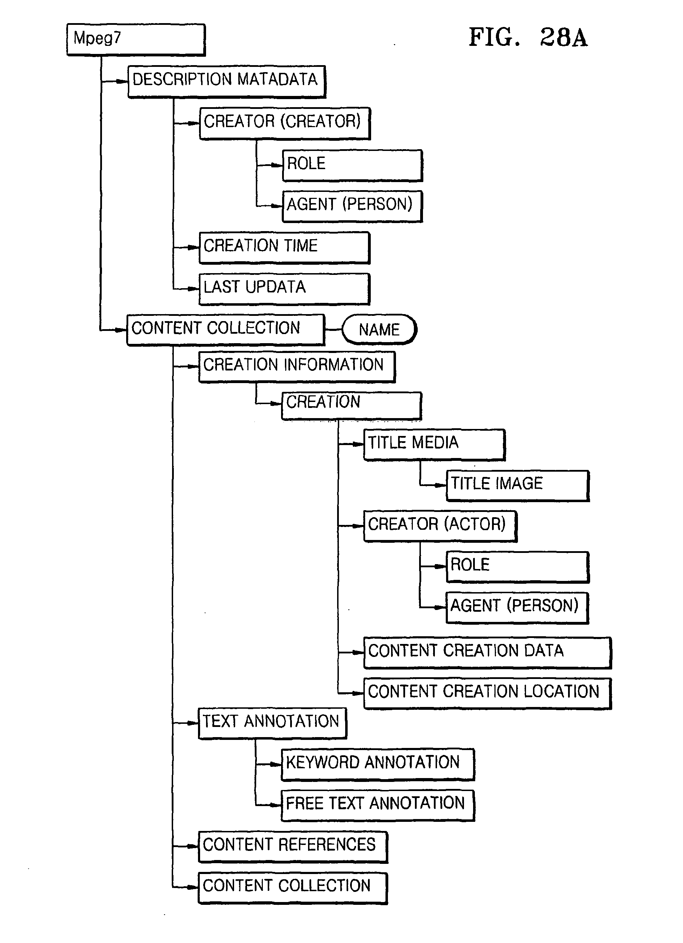

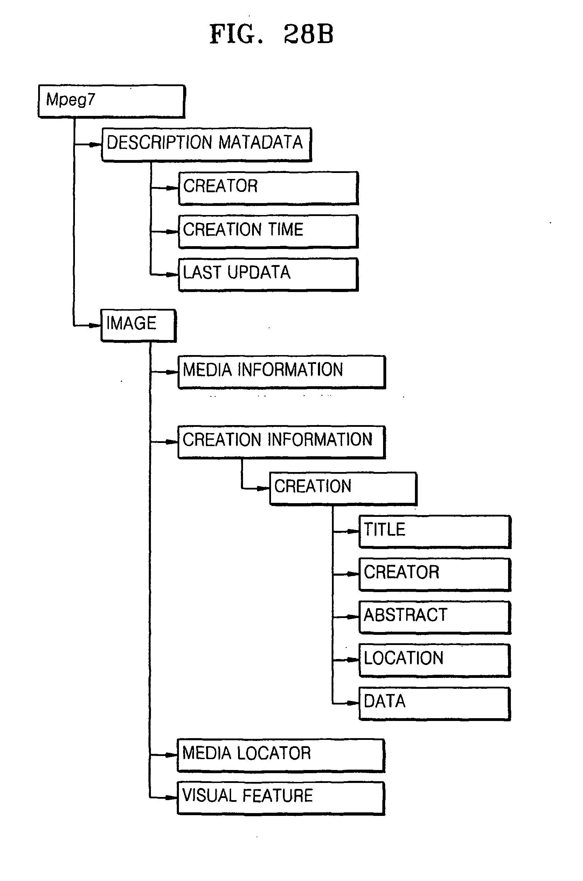

FIGS. 28A and 28B illustrate elements of collection level description metadata and item level description metadata according to an embodiment of the present invention. The following table 9 expresses the collection level description metadata in an XML format, and the following tables 10-1 and 10-2 express the item level description metadata in an XML format.

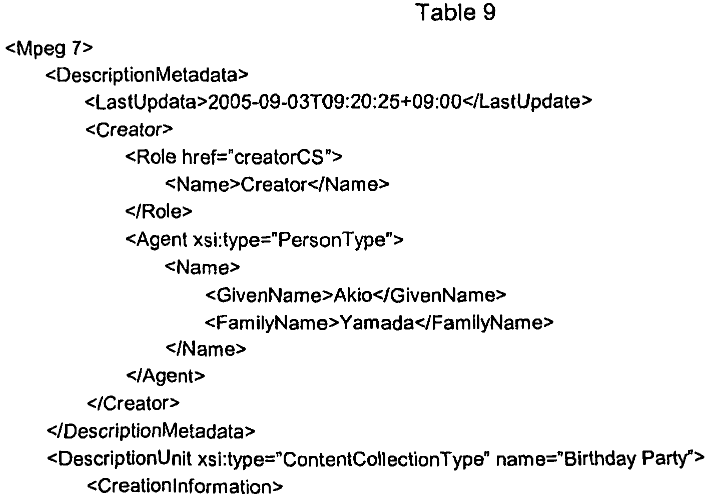

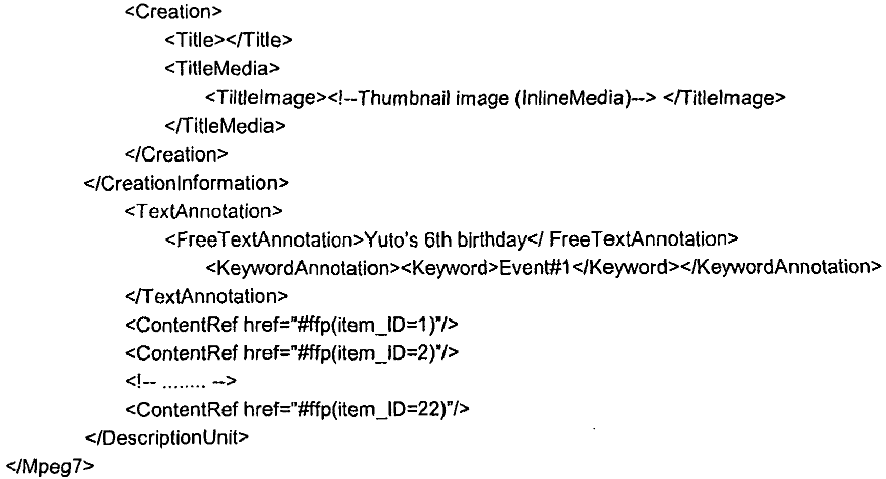

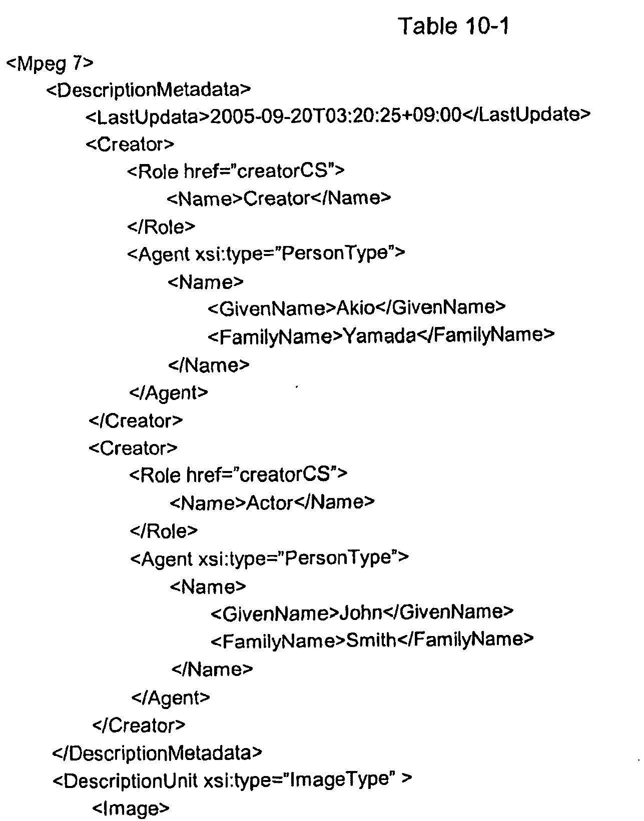

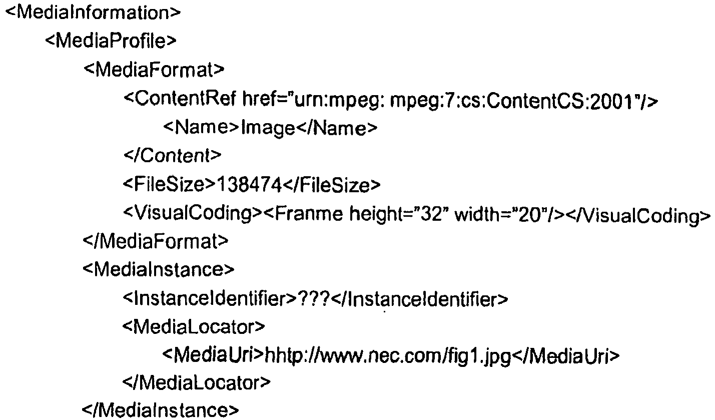

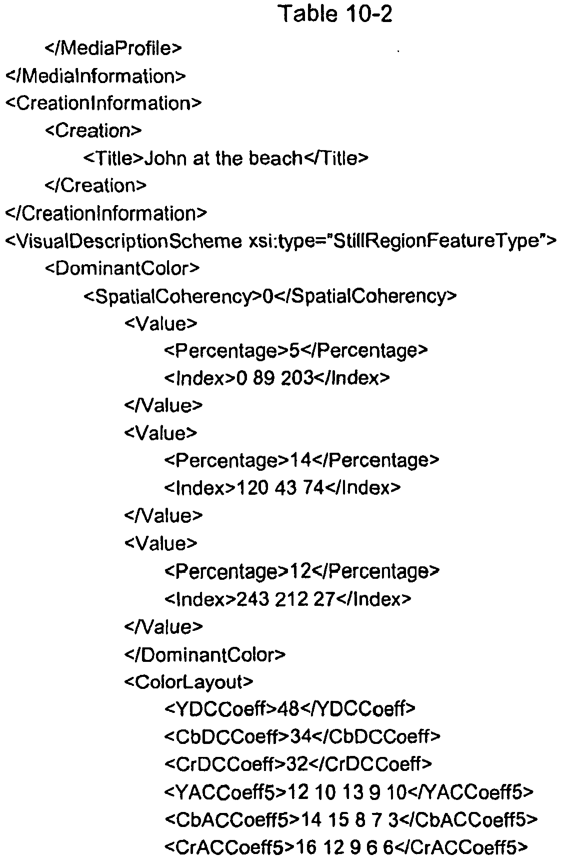

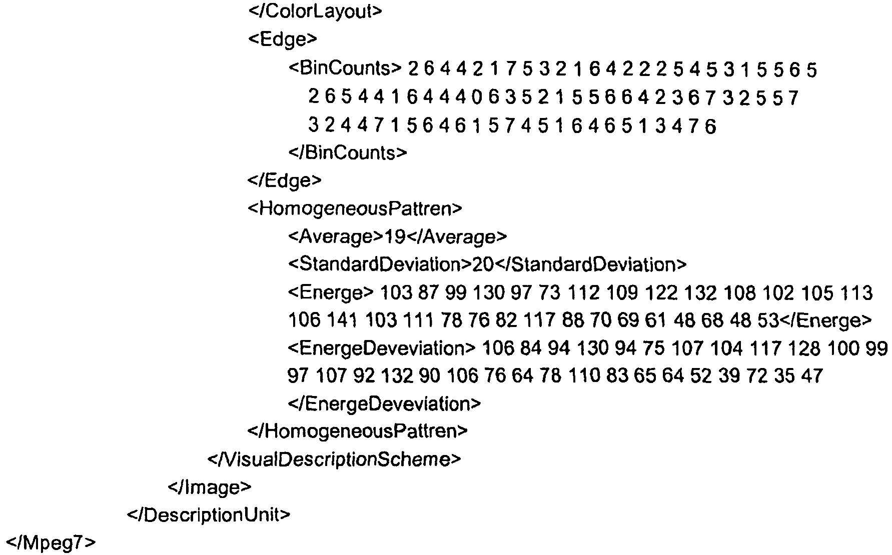

The following table 11 shows semantic tools of collection level description metadata of FIG. 28A.

**Table 11**

| Tag Name | | Semantics |
|---|---|---|
| DescriptionMetadata/ Creator | Optional | The author of the collection definition. Use the term "Creator" registered on RoleCS as his/her role. |
| DescriptionMetadata/ CreationTime | Optional | The time stamp when the collection definition was created. |
| DescriptionMetadata/ LastUpdate | Mandatory | The time stamp of the most recent change to the collection definition. |
| ContentCollection/ Name(attribute) | Optional | The name of collection. |
| ContentCollection/ CreationInformation/ Creation/ TitleMedia/ Titlelmage | Optional | The representative thumbnail picture of the collection. |
| ContentCollection/ CreationInformation/ Creation/ Creator | Optional | The actor who is captured in the collection. Use the term "Actor" registered in RoleCS as his/her roll. |
| ContentCollection/ CreationInformation/ Creation/ Date | Optional | The time (or period in time) when the photos in the collection were captured. |
| Contentcollection/ CreationInformation/ Creation/ | Optional | The location where the photos in the collection were captured. |

The following table 12 shows semantic tools of item level description metadata of FIG. 28B.

**Table 12**

| Tab Name | | Semantics |
|---|---|---|
| DescriptionMetadata/ Creator | Optional | Describing the author of the item description. Use the term "Creator" registered in RoleCS as his/her role. |
| DescriptionMetadata/ CreationTime | Optional | Describing the time stamp when the item description was created. |
| DescriptionMetadata/ LastUpdate | Mandatory | Describing the time stamp of the most recent change to the item description. |
| DescriptionUnit/ Image/ MediaInformation/ MediaProfile/ MediaFormat | Optional | Describing the file property of the original resource. Here original resource means eternal resource if it is available and internal resource if not; FileSize and Frame elements are used to specify the size of code-stream and pixel dimension of image, respectively. If external resource is available, this field represents the attributes of external one. |
| DescriptionUnit/ Image/ MediaInformation/ MediaProfile/ MediaInstance/ MediaLocator | Optional | Indicating the location where an external JPEG resource is available. Only one instance is allowed to be instantiated. Note that this is an optional element. In the case that no MediaLocator instance is included in the item-level metadata, it means that only Internal resource is available. |
| DescriptionUnit/ Image/ CreationInformation/ Creation/ Title | Optional | Describing the title of the resource. It might be available by referring to corresponding Exif tags of the resource. |
| DescriptionUnit Image/ CreationInformation Creation/ Creator | Optional | Describing persons or organizations who relate to the creation process of the resource, such as photographer, publisher and so on. Their roles can be described using RoleCS. A variety of methods can be used to identify the Creators, including electronic address elements such as url or email. Regarding the photographer, such information might be available by referring to corresponding Exif tags of the resource. If the Role is set to "Actor", this field also describes the identity of persons who appear in the image. |
| DescriptionUnit/ Image/ TextAnnotation | Optional | Describing summary text of the resource. It might be available by referring to corresponding Exif tags of the resource. |
| DescriptionUnit/ Image/ CreationInformation / Creation/ Location | Optional | Describing the location where the resource was captured. GPS location information might be available by referring to corresponding Exif tags of the resource. |
| DescriptionUnit/ Image/ CreationInformation / Creation/ Date | Optional | Describing the time when the resource was captured. It might be available by referring to corresponding Exif tags of the resource. |
| DescriptionUnit/ Image/ VisualDescriptionSc heme | Optional | Describing signal-level characteristics of the resource. Several elements can be instantiated. Suggestions appropriate to certain applications are given in Annex C. |

FIG. 29 illustrates elements of the event collection metadata of FIG. 8 according to an embodiment of the present invention.

FIG. 30 illustrates elements of the category collection metadata of FIG. 8 according to an embodiment of the present invention.

FIG. 31 illustrates elements of the person collection metadata of FIG. 8 according to an embodiment of the present invention.

The present invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

While the present invention has been particularly shown and described with reference to exemplary embodiments thereof, it will be understood by those of ordinary skill in the art that various changes in form and details may be made therein without departing from the spirit and scope of the present invention as defined by the following claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

### INDUSTRIAL APPLICABILITY

According to the present invention as described above, in a process of integrating digital photos and other multimedia content files into one file in the application file format MAF, visual feature information obtained from photo data and the contents of the photo images, and a variety of hint feature information for effective indexing of photos are included as metadata and content application method tools based on the metadata are included. Accordingly, even when the user does not have a specific application or a function for applying metadata, general-purpose multimedia content files can be effectively used by effectively browsing or sharing the multimedia content files.

### The following is a list of further preferred embodiments of the invention:

Embodiment 1: A method of encoding multimedia contents, comprising:
   separating media data and metadata from multimedia contents;
   creating metadata complying with a predetermined standard format by using the separated metadata; and
   encoding the media data and the metadata complying with the standard format, and thus creating a multimedia application format (MAF) file including a header containing information indicating a location of the media data, the metadata and the media data,
   wherein the metadata complying with the standard format includes media player metadata.
Embodiment 2: The method of embodiment 1, further comprising obtaining the multimedia content from a multimedia apparatus or inputting the multimedia content.
Embodiment 3: The method of embodiment 2, wherein the multimedia contents comprise photos acquired from a photo content acquiring apparatus and music and video data related to the photos.
Embodiment 4: The method of embodiment 1, wherein the separating of media data and metadata from multimedia contents comprises extracting information required to generate metadata related to a corresponding media content by parsing exchangeable image file format (Exif) metadata or decoding a joint photographic experts group (JPEG) image included in the multimedia contents.
Embodiment 5: The method of embodiment 4, wherein the metadata comprises Exif metadata of a JPEG photo file, ID3 metadata of an MP3 music file, and compression related metadata of an MPEG video file.
Embodiment 6: The method of embodiment 1, wherein in the creating of the metadata complying with a predetermined standard format, the metadata complying with an MPEG standard is created from the separated metadata, or the metadata complying with an MPEG standard is created by extracting and generating metadata from the media content by using an MPEG-based standardized description tool.
Embodiment 7: The method of embodiment 1, wherein the media player metadata comprises collection level metadata for grouping a plurality of photos and item level metadata for each photo.
Embodiment 8: The method of embodiment 7, wherein the item level metadata comprises:
   metadata describing creation information of corresponding metadata;
   metadata describing creation information of a photo that the item level metadata defines;
   metadata describing identification information of a photo that the item level metadata defines; and
   metadata of contents-based visual feature information of a photo that the item level metadata defines.
Embodiment 9: The method of embodiment 7, wherein the collection level metadata comprises:
   metadata describing creation information of corresponding metadata;
   metadata describing creation information of a photo collection that the collection level metadata defines;
   metadata describing identification information of each photo in a photo collection that the collection level metadata defines; and
   metadata of a sublevel photo collection in a photo collection that the collection level metadata defines.
Embodiment 10: The method of embodiment 9, wherein the metadata of each photo collection comprises a unique identifier, and also according to a corresponding identifier, comprises metadata representing a photo collection bound by an identical event, metadata representing a photo collection bound by an identical category, and metadata representing a photo collection bound by an identical person.
Embodiment 11: The method of embodiment 9, wherein the metadata of the photo collection that the collection level metadata defines is expressed by ContentCollection DS of MPEG-7.
Embodiment 12: The method of embodiment 10, wherein the identifier of a photo collection is defined by "Event" representing an event collection, "Category" representing a category collection, and "Person" representing a person collection.
Embodiment 13: The method of embodiment 10, wherein the metadata of an event collection comprises metadata representing a title of a corresponding event collection, and metadata representing a photographing time of photos in the event collection.
Embodiment 14: The method of embodiment 13, wherein the metadata representing a title of an event collection is expressed in "//CreationInformationDS/Creation/Title" of MPEG-7 DS, and the metadata representing a photographing time of photos in the event collection is expressed in "//CreationInformationDS/Creation/CreationCoordinates/Date" of MPEG-7 MDS when expressing the metadata of an event collection.
Embodiment 15: The method of embodiment 10, wherein the metadata of a category collection comprises metadata representing a title of a corresponding category collection.
Embodiment 16: The method of embodiment 15, wherein the metadata representing a title of a category collection is expressed in "//CreationInformationDS/Classification/Subject/KeywordAnnotation/Keyword/"" of MPEG-7 DS for expressing the metadata of a category collection.
Embodiment 17: The method of embodiment 10, wherein the person collection metadata comprises metadata representing a name of a person corresponding to a person collection.
Embodiment 18: The method of embodiment 17, wherein metadata representing a name of a person of the person collection, which is "//CreatinoInformationDS/Creation/Creator/Role" of MPEG-7 MDS, is represented in "Actor", and a name of a corresponding person is expressed using "//CreationInformationDS/Creation/Creator/Agent.
Embodiment 19: The method of embodiment 1, wherein the metadata complying with the standard format further comprises media album metadata.
Embodiment 20: The method of embodiment 19, wherein the media album metadata comprises at least one of content-based feature values of the media content, media group information, media application information, right information on a media album, and media albuming hints.
Embodiment 21: The method of embodiment 20, wherein the content-based feature values of the media data comprises:
   a visual descriptor that is metadata related to the visual feature information of the media data; and
   an audio descriptor that is metadata related to the audio feature information of the media data.
Embodiment 22: The method of embodiment 20, wherein the media group information is expressed using MPEG-7 multimedia description scheme (MDS) or MPEG-21 digital item declaration (DID).
Embodiment 23: The method of embodiment 22, wherein the media group information comprises media creation information metadata, semantic information metadata, and contents configuration metadata for expressing the media group information using the MPEG-7 MDS.
Embodiment 24: The method of embodiment 20, wherein the media application information is a description of,
   a procedure for a media album apparatus to display a plurality of photos on a screen based on metadata, described using an MPEG-4 scene descriptor, or
   a procedure to display a plurality of photos on a screen based on metadata, described using MPEG-21 digital item processing (DIP), or
   information to adaptively transform a photo album MAF file with respect to the performance of a terminal or a network, described using MPEG-21 digital item adaptation (DIA).
Embodiment 25: The method of embodiment 20, wherein right information on the media album comprises:
   MPEG-21 intellectual property management and protection (IPMP) as an item to control other users' access to the photo album;
   an item to control browsing of a media album MAF file;
   an item to control printing of the media album MAF file; and
   an item to control editing of the media album MAF file.
Embodiment 26: The method of embodiment 20, wherein the media albuming hints comprises:
   a description structure for expressing camera information and photographing information when a photo is taken;
   a description structure for expressing perceptional characteristics of a human being in relation to the contents of a photo;
   a description structure for expressing view information of a camera;
   a description structure for expressing information on persons included in a photo; and
   a description structure for expressing popularity information of a photo.
Embodiment 27: The method of embodiment 26, wherein the description structure for expressing camera information and photographing information when a photo is taken comprises:
   at least one of information on the photographer who takes a photo, time information on the time when a photo is taken, manufacturer information on the manufacturer of the camera with which a photo is taken, camera model information of a camera with which a photo is taken, shutter speed information of a shutter speed used when a photo is taken, color mode information of a color mode used when a photo is taken, information indicating the sensitivity of a film when a photo is taken, information indicating whether or not a flash is used when a photo is taken, information indicating the aperture number of a lens iris used when a photo is taken, information indicating the optical zoom distance used when a photo is taken, information indicating the focal length used when a photo is taken, information indicating the distance between the focused-upon subject and the camera when a photo is taken, global positioning system (GPS) information on a place where a photo is taken, information indicating the orientation of a first pixel of a photo image as the orientation of a camera when the photo is taken, information indicating sound recorded together when a photo is taken, and information indicating a thumbnail image stored for high-speed browsing in a camera after a photo is taken; and
   information indicating whether or not the photo data includes Exif information as metadata.
Embodiment 28: The method of embodiment 26, wherein the description structure for expressing perceptional characteristics of a human being in relation to the contents of a photo comprises at least one of:
   an item (avgColorfulness) indicating the colorfulness of the color tone expression of a photo;
   an item (avgColorCoherence) indicating the color coherence of the entire color tone appearing in a photo;
   an item (avgLevelOfDetail) indicating the detailedness of the contents of a photo;
   an item (avgHomogenity) indicating the homogeneity of texture information of the contents of a photo;
   an item (avgPowerOfEdge) indicating the robustness of edge information of the contents of a photo;
   an item (avgDepthOfField) indicating the depth of the focus of a camera in relation to the contents of a photo;
   an item (avgBlurmess) indicating the blurriness of a photo caused by shaking of a camera generally due to a slow shutter speed;
   an item (avgGiareness) indicating the degree that the contents of a photo are affected by a very bright flash light or a very bright external light source when the photo is taken; and
   an item (avgBrightness) indicating information on the brightness of an entire photo.
Embodiment 29: The method of embodiment 28, wherein the description structure indicating the colorfulness of the color tone expression of a photo is measured after normalizing the histogram heights of each RGB color value and the distribution value of the entire color values from a color histogram, or by using the distribution value of a color measured using a CIE L*u*v color space.
Embodiment 30: The method of embodiment 28, wherein the description structure indicating the color coherence of the entire color tone appearing in a photo can be measured by using a dominant color descriptor from among the MPEG-7 visual descriptors, and is measured by normalizing the histogram heights of each color value and the distribution value of the entire color values from a color histogram.
Embodiment 31: The method of embodiment 28, wherein the description structure indicating the detailedness of the contents of a photo is measured by using an entropy measured from the pixel information of the photo, or by using an isopreference curve that is an element for determining the actual complexity of a photo, or by using a relative measurement method in which compression ratios are compared when compressions are performed under identical compression conditions.
Embodiment 32: The method of embodiment 28, wherein the description structure indicating the homogeneity of texture information of the contents of a photo is measured by using the regularity, direction and scale of texture from feature values of a texture browsing descriptor among the MPEG-7 visual descriptors.
Embodiment 33: The method of embodiment 28, wherein the description structure indicating the robustness of edge information of the contents of a photo is measured by extracting edge information from a photo and normalizing the extracted edge power.
Embodiment 34: The method of embodiment 28, wherein the description structure indicating the depth of the focus of a camera in relation to the contents of a photo is measured by using the focal length and diameter of a camera lens, and an iris number.
Embodiment 35: The method of embodiment 28, wherein the description structure indicating the blurriness of a photo caused by shaking of a camera due to a slow shutter speed is measured by using the edge power of the contents of the photo.
Embodiment 36: The method of embodiment 28, wherein the description structure indicating the degree that the contents of a photo are affected by a very bright external light source is measured by using the brightness of the pixel value of the photo.
Embodiment 37: The method of embodiment 28, wherein the description structure indicating information on the brightness of an entire photo is measured by using the brightness of the pixel value of the photo.
Embodiment 38: The method of embodiment 26, wherein the description structure for expressing information on persons included in a photo comprises:
   an item indicating the number of persons included in a photo;
   an item indicating the position of the face of each person and the position of clothes worn by the person; and
   an item indicating the relationship between persons included in a photo.
Embodiment 39: The method of embodiment 38, wherein the item indicating the position information of the face and clothes of each person included in a photo comprises an ID, the face position, and the position of clothes of the person.
Embodiment 40: The method of embodiment 38, wherein the item indicating the relationship between persons included in a photo comprises an item indicating a first person of the two person in the relationship, an item indicating the second person, and an item indicating the relationship between the two persons.
Embodiment 41: The method of embodiment 26, wherein the description structure for expressing the view information of the photo comprises:
   an item indicating whether the main subject of a photo is a background or a foreground;
   an item indicating the position of a part corresponding to the background of a photo in the contents expressed in the photo;
   an item indicating the position of a part corresponding to the background of a photo.
Embodiment 42: The method of embodiment 1, further comprising creating MAF application method data, wherein in the encoding of the media data and the metadata complying with the standard format, and thus the creating of the MAF file, the MAF file including the header containing information indicating the media data, the metadata and the media data is created using the media data, the metadata complying with the standard format, and the MAF application method data.
Embodiment 43: The method of embodiment 42, wherein the MAF application method data comprises:
   an MPEG-4 scene descriptor for the MAF application method data for describing an albuming method defined by a media albuming tool and a procedure and method for media reproduction; and
   an MPEG-21 DIP descriptor for processing a digital item according to an intended format and procedure.
Embodiment 44: The method of embodiment 1 or embodiment 42, wherein in the encoding of the media data and the metadata complying with the standard format, and thus the creating of the MAF file, the MAF file comprises a single track MAF as a basic element, in which the single track MAF is formed with one media content and corresponding metadata, and the single track MAF comprises a header related to the track, MPEG metadata, and media data.
Embodiment 45: The method of embodiment 1, wherein in the encoding of the media data and the metadata complying with the standard format, and thus the creating of the MAF file, the MAF file comprises a multi-track MAF including one or more single track MAFs, an MAF header related to the multiple tracks and MPEG metadata for the multiple tracks.
Embodiment 46: The method of embodiment 42, wherein in the encoding of the media data and the metadata complying with the standard format, and thus the creating of the MAF file, the MAF file comprises a multi-track MAF including one or more single track MAFs, an MAF header related to the multiple tracks, MPEG metadata for the multiple tracks, and data on the application method of the MAF file.
Embodiment 47: A method of applying multimedia contents comprising:
   storing in a database, an MAF file, including at least one single track which includes a header containing information indicating a location of media data, media data complying with a predetermined standard format, and media metadata, and application data indicating information on an application method of the media; and
   browsing or sharing the MAF file stored in the database,
   wherein the media data complying with a predetermined standard format is at least one of media player metadata or media album metadata.
Embodiment 48: The method of embodiment 47, wherein the MAF file physically includes the media data, or the MAF file does not physically include the media data and instead includes a locator indicating the position of another storage apparatus in which the media data exists.
Embodiment 49: The method of embodiment 48, wherein if the MAF file does not physically include the media data, the MAF file includes a thumbnail image together with the locator.
Embodiment 50: The method of embodiment 47, wherein in the storing the MAF file in the database, the MAF file is stored according to an event MAF in which photos are grouped in units of events and photos of an identical event are stored as an integrated MAF file, a person MAF in which photos are grouped based on persons and photos including an identical person are stored as an integrated MAF file, and a category MAF in which photos are grouped based on categories and photos belonging to an identical category are stored as an integrated MAF file.
Embodiment 51: The method of embodiment 47, wherein in the browsing or sharing of the MAF file stored in the database, the browsing or sharing of the MAF file is performed according to a user's query.
Embodiment 52: The method of embodiment 51, wherein MAF files matching the user's query are found by parsing the metadata of each MAF file stored in the database.
Embodiment 53: The method of embodiment 47, wherein in the browsing or sharing of the MAF file stored in the database, a created media album MAF file is transmitted to other devices through a communication channel.
Embodiment 54: The method of embodiment 47, wherein in the browsing or sharing of the MAF file stored in the database, the MAF file is transmitted to a device which can recognize the MAF but does not provide full compatibility, a terminal device which fully recognizes the MAF, a mobile device which fully recognizes the MAF, or to a web album device which fully recognizes the MAF.
Embodiment 55: The method of embodiment 47, wherein in the browsing or sharing of the MAF file stored in the database, the MAF file includes a presentation tool which expresses photos systematically based on metadata.
Embodiment 56: The method of embodiment 47, wherein in the browsing or sharing of the MAF file stored in the database, if the presentation tool which expresses photos systematically based on metadata does not exist in the MAF file, photo browsing is enabled by using a presentation tool of an application that the user has.
Embodiment 57: The method of embodiment 47, wherein the browsing or sharing of the MAF file stored in the database comprises:
   if the device does not perform highly enough to generate metadata,
   transmitting obtained photo data to a high performance album server so that metadata is created, then, receiving the data again as a photo album MAF file and thus based on the metadata, effectively browsing photos; and
   the user editing part of the received MAF file in order to generate a new MAF file and transmitting the new MAF to other users.
Embodiment 58: The method of embodiment 47, wherein the browsing or sharing of the MAF file stored in the database comprises transmitting files, which are obtained from a variety of photographing apparatuses and encoded in a photo album MAF format, to a web album apparatus through the Internet.
Embodiment 59: The method of embodiment 58, wherein when a great number of photos included in the photo album MAF are stored in the web album apparatus, one MAF file is transmitted to the web album apparatus and the web album apparatus extracts metadata from the transmitted MAF file and automatically performs categorization.
Embodiment 60: The method of embodiment 58, wherein the browsing or sharing of the MAF file stored in the database comprises:
   decoding the input MAF file;
   performing user authentication by using the decoded metadata;
   if the user is authenticated, reading the rights of the user related to a photo album;
   extracting metadata according the read right;
   extracting photos by using the extracted metadata; and
   uploading the extracted photos on a web site.
Embodiment 61: An apparatus for encoding multimedia contents, comprising:
   a pre-processing unit separating media data and metadata from multimedia contents;
   a metadata creation unit creating metadata complying with a predetermined standard format by using the separated metadata; and
   an encoding unit encoding the media data and the metadata complying with the standard format, and thus creating an MAF file including a header containing information indicating a location of the media data, the metadata and the media data,
   wherein the metadata complying with the standard format includes media player metadata.
Embodiment 62: The apparatus of embodiment 61, further comprising a media acquisition unit obtaining and/or inputting the multimedia content from a multimedia apparatus.
Embodiment 63: The apparatus of embodiment 61, wherein the multimedia contents comprise photos acquired from a photo content acquiring apparatus and music and video data related to the photos.
Embodiment 64: The apparatus of embodiment 61, wherein the pre-processing unit extracts information required to generate metadata of a corresponding media content by parsing Exif metadata or decoding a JPEG image included in the multimedia content.
Embodiment 65: The apparatus of embodiment 61, wherein the metadata creation unit creates metadata complying with an MPEG standard from the separated metadata, or the metadata complying with an MPEG standard is created by extracting and creating metadata from the media content by using an MPEG-based standardized description tool.
Embodiment 66: The apparatus of embodiment 61, wherein the media player metadata comprises collection level metadata for grouping a plurality of photos and item level metadata for each photo.
Embodiment 67: The apparatus of embodiment 66, wherein the item level metadata comprises:
   metadata describing creation information of corresponding metadata;
   metadata describing creation information of a photo that the item level metadata defines;
   metadata describing identification information of a photo that the item level metadata defines; and
   metadata of contents-based visual feature information of a photo that the item level metadata defines.
Embodiment 68: The apparatus of embodiment 66, wherein the collection level metadata comprises:
   metadata describing creation information of corresponding metadata;
   metadata describing creation information of a photo collection that the collection level metadata defines;
   metadata describing identification information of each photo in a photo collection that the collection level metadata defines; and
   metadata of a sublevel photo collection in a photo collection that the collection level metadata defines.
Embodiment 69: The apparatus of embodiment 61, wherein the metadata complying with the standard format standard format further includes media album metadata.
Embodiment 70: The apparatus of embodiment 69, wherein the media album metadata comprises at least one of content-based feature values of the media data, media group information, media application information, right information on a media album, and media albuming hints.
Embodiment 71: The apparatus of embodiment 61, further comprising an application method data creation unit creating MAF application method data, wherein the encoding unit creates an MAF file including the header containing information indicating the media data, the metadata and the media data, by using the media data, the metadata complying with the standard format, and the MAF application method data.
Embodiment 72: The apparatus of embodiment 71, wherein the MAF application method data comprises:
   an MPEG-4 scene descriptor for describing an albuming method defined by a media albuming tool and a procedure and method for media reproduction; and
   an MPEG-21 DIP descriptor.
Embodiment 73: The apparatus of embodiment 61 or embodiment 71, wherein the MAF file comprises a single track MAF as a basic element, in which the MAF file is formed with one media content and corresponding metadata, and the single track MAF comprises a header related to the track, MPEG metadata, and media data.
Embodiment 74: The apparatus of embodiment 61 or embodiment 71, wherein the MAF file comprises a multi-track MAF including one or more single track MAFs, an MAF header related to the multiple tracks and MPEG metadata for the multiple tracks.
Embodiment 75: The apparatus of embodiment 71, wherein the MAF file comprises a multi-track MAF including one or more single track MAFs, an MAF header related to the multiple tracks, MPEG metadata for the multiple tracks, and data on the application method of the MAF file.
Embodiment 76: A system for applying multimedia contents, comprising:
   a database storing an MAF file, including at least one single track which includes a header containing information indicating a location of media data, media data, and media metadata, and application data indicating information on an application method of the media; and
   an application unit browsing or sharing the MAF file stored in the database,
   wherein media data complying with the standard format is at lease one of media player metadata and media album metadata.
Embodiment 77: The system of embodiment 76, wherein the MAF file physically includes the media data, or the MAF file does not physically include the media data and instead includes a locator indicating the position of another storage apparatus in which the media data exists.
Embodiment 78: The system of embodiment 77, wherein if the MAF file does not physically include the media data, the MAF file includes a thumbnail image together with the locator.
Embodiment 79: The system of embodiment 76, wherein the database stores the MAF file according to an event MAF in which photos are grouped in units of events and photos of an identical event are stored as an integrated MAF file, a person MAF in which photos are grouped based on persons and photos including an identical person are stored as an integrated MAF file, and a category MAF in which photos are grouped based on categories and photos belonging to an identical category are stored as an integrated MAF file.
Embodiment 80: The system of embodiment 76, further comprising a query processing unit processing a query of a user, and browsing or sharing an MAF file stored in the database according to the user's query.
Embodiment 81: The system of embodiment 76, wherein the application unit finds MAF files matching the user's query by parsing the metadata of each MAF file stored in the database.
Embodiment 82: The system of embodiment 76, wherein the application unit transmits the created MAF file to other devices through a communication channel.
Embodiment 83: The system of embodiment 82, wherein the application unit transmits the MAF file, to a device which can recognize the MAF but does not provide full compatibility, a terminal device which fully recognizes the MAF, a mobile device which fully recognizes the MAF, or to a web album device which fully recognizes the MAF.
Embodiment 84: The system of embodiment 76, wherein the application unit includes a presentation tool, which expresses photos systematically based on metadata, in the MAF file.
Embodiment 85: The system of embodiment 76, wherein if the presentation tool which expresses photos systematically based on metadata does not exist in the MAF file, the application unit enables photo browsing by using a presentation too! of an application of the user.
Embodiment 86: The system of embodiment 76, wherein the application unit transmits files, which are obtained from a variety of photographing apparatuses and encoded in a photo album MAF format, to a web album apparatus through the Internet.
Embodiment 87: The system of embodiment 86, wherein when a great number of photos included in the MAF file are stored in a web album apparatus, one MAF file is transmitted to the web album apparatus and the web album apparatus extracts metadata from the transmitted MAF file and automatically performs categorization.
Embodiment 88: A computer readable recording medium having embodied thereon a computer program for executing the method of any one of embodiments 1 through 46.
Embodiment 89: A computer readable recording medium having embodied thereon a computer program for executing the method of any one of embodiments 47 through 60.

## Claims

1. A method of applying multimedia contents comprising:
storing in a database, a plurality of MAF files, each of the MAF files including at least one single track which includes a header containing information indicating a location of media data, media data complying with a predetermined standard format, and media metadata, and application data indicating information on an application method of the media data; and
browsing or sharing the MAF file stored in the database,
wherein the media data complying with a predetermined standard format is at least one of media player metadata or media album metadata.

2. The method of claim 1, wherein the MAF file physically includes the media data, or the MAF file does not physically include the media data and instead includes a locator indicating the position of another storage apparatus in which the media data exists.

3. The method of claim 2, wherein if the MAF file does not physically include the media data, the MAF file includes a thumbnail image together with the locator.

4. The method of claim 1, wherein in the storing the MAF file in the database, the MAF file is stored according to an event MAF in which photos are grouped in units of events and photos of an identical event are stored as an integrated MAF file, a person MAF in which photos are grouped based on persons and photos including an identical person are stored as an integrated MAF file, and a category MAF in which photos are grouped based on categories and photos belonging to an identical category are stored as an integrated MAF file.

5. The method of claim 1, wherein in the browsing or sharing of the MAF file stored in the database, the browsing or sharing of the MAF file is performed by parsing the metadata of each MAF file stored in the database according to a user's query.

6. The method of claim 1, wherein in the browsing or sharing of the MAF file stored in the database, a created media album MAF file is transmitted to other devices through a communication channel.

7. The method of claim 1, wherein in the browsing or sharing of the MAF file stored in the database, the MAF file is transmitted to a device which can recognize the MAF but does not provide full compatibility, a terminal device which fully recognizes the MAF, a mobile device which fully recognizes the MAF, or to a web album device which fully recognizes the MAF.

8. The method of claim 1, wherein in the browsing or sharing of the MAF file stored in the database, the MAF file includes a presentation tool which expresses photos systematically based on metadata.

9. The method of claim 1, wherein in the browsing or sharing of the MAF file stored in the database, if the presentation tool which expresses photos systematically based on metadata does not exist in the MAF file, photo browsing is enabled by using a presentation tool of an application that the user has.

10. The method of claim 1, wherein the browsing or sharing of the MAF file stored in the database comprises:
if the device does not perform highly enough to generate metadata, transmitting obtained photo data to a high performance album server so that metadata is created, then, receiving the data again as a photo album MAF file and thus based on the metadata, effectively browsing photos; and
the user editing part of the received MAF file in order to generate a new MAF file and transmitting the new MAF to other users.

11. The method of claim 1, wherein the browsing or sharing of the MAF file stored in the database comprises transmitting files, which are obtained from a variety of photographing apparatuses and encoded in a photo album MAF format, to a web album apparatus through the Internet.

12. The method of claim 11, wherein when a great number of photos included in the photo album MAF are stored in the web album apparatus, one MAF file is transmitted to the web album apparatus and the web album apparatus extracts metadata from the transmitted MAF file and automatically performs categorization.

13. The method of claim 11, wherein the browsing or sharing of the MAF file stored in the database comprises:
decoding the input MAF file;
performing user authentication by using the decoded metadata;
if the user is authenticated, reading the rights of the user related to a photo album;
extracting metadata according the read right;
extracting photos by using the extracted metadata; and
uploading the extracted photos on a web site.

14. A system for applying multimedia contents, comprising:
a database storing a plurality of MAF files, each of the MAF files including at least one single track which includes a header containing information indicating a location of media data, media data, and media metadata, and application data indicating information on an application method of the media data; and
an application unit browsing or sharing the MAF file stored in the database,
wherein media data complying with the standard format is at lease one of media player metadata and media album metadata.

15. A computer-readable recording medium having embodied thereon a computer program for executing the method of any one of claims 1 through 13.
